# EUROPEAN PATENT APPLICATION

(11) **EP 4 836 463 A1**
(43) Date of publication of application: **04.11.2026**
(21) Application number: 23962824.1
(22) Date of filing: 29.12.2023
(51) Int. Cl.: H04W 8/14

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: RGTH
(86) International application number: PCT/CN2023/143379
(87) International publication number: WO 2025/138150

(57) **Abstract**

Provided are a wireless communication method and a communication device. The method comprises: on the basis of a first policy, a terminal determines a first network associated with a first service, the first policy comprising a first association relationship between services and networks; and the terminal transmits the first service by means of the first network. In embodiments of the present application, a first policy is introduced, wherein the first policy comprises a first association relationship between services and networks, so that a terminal can determine, on the basis of the first association relationship, a first network associated with a first service, and transmit the first service by means of the first network, thereby improving the transmission efficiency of the services in a multi-access scenario.

## Description

### TECHNICAL FIELD

This application relates to the field of communications technologies, and more specifically, to a wireless communication method and a communications device.

### BACKGROUND

In some scenarios, a terminal may simultaneously access a plurality of networks and perform service transmission by using user plane connections in the plurality of networks, which is also known as a multi-access scenario. For example, a terminal can simultaneously access a 3rd Generation Partnership Project (3rd Generation Partnership Project, 3GPP) access network 1 and a 3GPP access network 2, and perform service transmission with a user plane network element 1 in the core network via the 3GPP access network 1, and perform service transmission with a user plane network element 2 in the core network via the 3GPP access network 2. However, in existing technologies, how a terminal uses a plurality of networks to perform service transmission has not been specified, resulting in low efficiency of the terminal in accessing the plurality of networks for service transmission.

### SUMMARY

This application provides a wireless communication method and a communications device. Various aspects of this application are described below.

According to a first aspect, a wireless communication method is provided, and the method includes: determining, by a terminal based on a first policy, a first network associated with a first service, where the first policy includes a first association relationship between a service and a network; and transmitting, by the terminal, the first service through the first network.

According to a second aspect, a wireless communication method is provided, and the method includes: transmitting, by a core network device, a first policy to a terminal, where the first policy includes a first association relationship between a service and a network.

According to a third aspect, a wireless communication method is provided, and the method includes: determining, by a terminal, a UE route selection policy (UE route selection policy, URSP) corresponding to a first service, where the URSP is used to indicate one or more of the following: a third association relationship between a network and a radio access technology (radio access technology, RAT) type; or a fourth association relationship between the network and a system type, where the system type is used to indicate a type of a core network in the network and/or a type of a non-access network in the network.

According to a fourth aspect, a wireless communication method is provided, and the method includes: transmitting, by a core network device, a UE route selection policy URSP to a terminal, where the URSP is used to indicate one or more of the following: a third association relationship between a network and a radio access technology RAT type; or a fourth association relationship between the network and a system type, where the system type is used to indicate a type of a core network in the network and/or a type of a non-access network in the network.

According to a fifth aspect, a wireless communication method is provided, and the method includes: transmitting, by a first device, first information to a second device, where the first information carries capability information associated with a network access mode.

According to a sixth aspect, a wireless communication method is provided, and the method includes: receiving, by a second device, first information transmitted by a first device, where the first information carries capability information associated with a network access mode.

According to a seventh aspect, a terminal is provided, and the terminal includes: a processing unit, configured to: determine, based on a first policy, a first network associated with a first service, where the first policy includes a first association relationship between a service and a network; and transmit the first service via the first network.

In an eighth aspect, a core network device is provided, and the core network device includes: a transmitting unit, configured to transmit a first policy to a terminal, where the first policy includes a first association relationship between a service and a network.

In a ninth aspect, a terminal is provided, and the terminal includes: a processing unit, configured to determine a UE route selection policy URSP corresponding to a first service, where the URSP is used to indicate one or more of the following: a third association relationship between a network and a radio access technology RAT type; or a fourth association relationship between the network and a system type, where the system type is used to indicate a type of a core network in the network and/or a type of a non-access network in the network.

According to a tenth aspect, a core network device is provided, and the core network device includes: a transmitting unit, configured to transmit a UE route selection policy URSP to a terminal, where the URSP is used to indicate one or more of the following: a third association relationship between a network and a radio access technology RAT type; or a fourth association relationship between the network and a system type, where the system type is used to indicate a type of a core network in the network and/or a type of a non-access network in the network.

According to an eleventh aspect, a communications device is provided. The communications device is a first device, and includes: a transmitting unit, configured to transmit first information to a second device, where the first information carries capability information associated with a network access mode.

In a twelfth aspect, a communications device is provided, where the communications device is a second device, and includes: a receiving unit, configured to receive first information transmitted by a first device, where the first information carries capability information associated with a network access mode.

According to a thirteenth aspect, a communications device is provided. The communications device includes a processor, a memory, and a communications interface. The memory is configured to store one or more computer programs, and the processor is configured to invoke the computer program in the memory, to cause the communications device to execute some or all of the steps in the methods according to the foregoing aspects.

According to a fourteenth aspect, an embodiment of this application provides a communications system, where the system includes the terminal and/or the network device described above. In another possible design, the system may further include another device that interacts with the terminal or the network device in the solutions provided in embodiments of this application.

According to a fifteenth aspect, an embodiment of this application provides a computer-readable storage medium. The computer-readable storage medium stores a computer program, and the computer program causes a communications device (for example, a terminal or a network device) to execute some or all of the steps in the method according to the foregoing aspects.

According to a sixteenth aspect, an embodiment of this application provides a computer program product. The computer program product includes a non-transitory computer-readable storage medium that stores a computer program. The computer program is operable to cause a communications device (for example, a terminal or a network device) to execute some or all of the steps in the method according to the foregoing aspects. In some implementations, the computer program product may be a software installation package.

According to a seventeenth aspect, an embodiment of this application provides a chip. The chip includes a memory and a processor. The processor may invoke a computer program from the memory and run the computer program, to implement some or all of the steps described in the method according to the foregoing aspects.

In embodiments of this application, a first policy is introduced, where the first policy includes a first association relationship between a service and a network. In this way, the terminal may determine, based on the first association relationship, a first network associated with a first service, and transmit the first service through the first network, to improve service transmission efficiency in a multi-access scenario.

### BRIEF DESCRIPTION OF DRAWINGS

FIG. 1 is a schematic diagram of a wireless communications system to which embodiments of this application are applicable.
FIG. 2 is a flowchart of a UE policy configuration procedure to which embodiments of this application are applicable.
FIG. 3 is a schematic diagram of service transmission performed based on multiple access modes to which embodiments of this application are applicable.
FIG. 4A is another schematic diagram of service transmission performed based on multiple access modes to which embodiments of this application are applicable.
FIG. 4B is another schematic diagram of service transmission performed based on multiple access modes to which embodiments of this application are applicable.
FIG. 4C is another schematic diagram of service transmission performed based on multiple access modes to which embodiments of this application are applicable.
FIG. 5 is a schematic flowchart of a wireless communication method according to an embodiment of this application.
FIG. 6 is a schematic flowchart of a method for using a first policy according to an embodiment of this application.
FIG. 7 is a schematic flowchart of a method for using a first policy according to another embodiment of this application.
FIG. 8 is a schematic flowchart of a method for using a preemption priority according to an embodiment of this application.
FIG. 9 is a schematic flowchart of a wireless communication method according to another embodiment of this application.
FIG. 10 is a schematic flowchart of a wireless communication method according to an embodiment of this application.
FIG. 11 is a schematic flowchart of a wireless communication method according to another embodiment of this application.
FIG. 12 is a schematic diagram of a terminal according to an embodiment of this application.
FIG. 13 is a schematic diagram of a core network device according to an embodiment of this application.
FIG. 14 is a schematic diagram of a terminal according to another embodiment of this application.
FIG. 15 is a schematic diagram of a core network device according to another embodiment of this application.
FIG. 16 is a schematic diagram of a communications device according to an embodiment of this application.
FIG. 17 is a schematic diagram of a communications device according to another embodiment of this application.
FIG. 18 is a schematic diagram of a structure of a communications apparatus according to an embodiment of this application.

### DESCRIPTION OF EMBODIMENTS

Technical solutions in this application are described below with reference to the accompanying drawings. For ease of understanding of this application, the following first describes an architecture to which embodiments of this application are applicable, related communication processes, and terms.

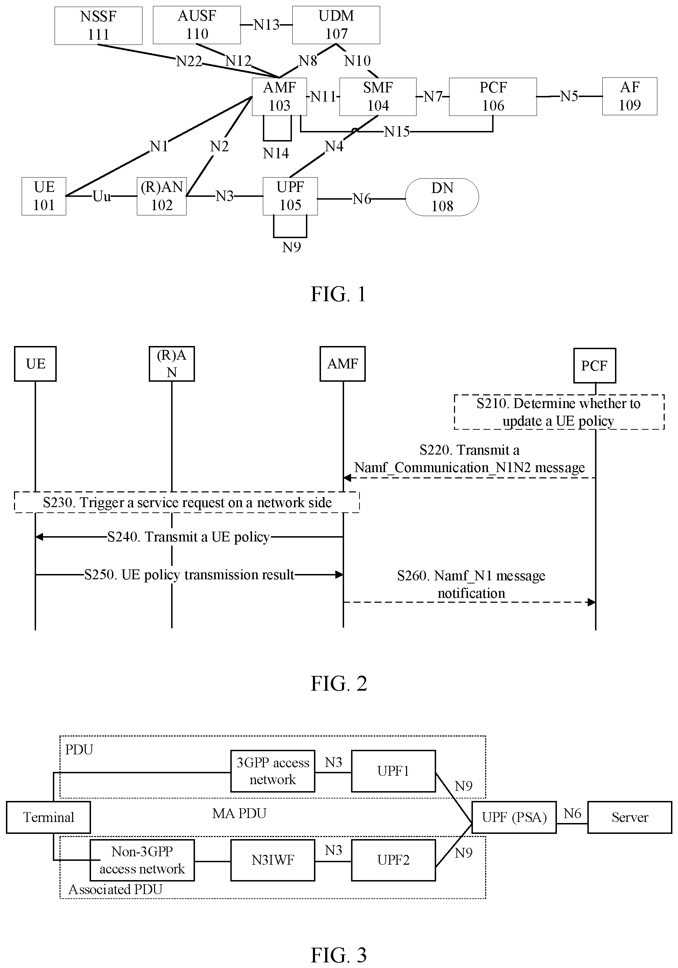

FIG. 1 is a schematic diagram of a wireless communications system to which embodiments of this application are applicable. As shown in FIG. 1, a 5th generation (5th generation, 5G) system or new radio (new radio, NR) network architecture released by the 3rd Generation Partnership Project (3rd Generation Partnership Project, 3GPP) standard organization includes: a terminal device (also referred to as a "user equipment (user equipment, UE)" 101, an access network device 102 (including a radio access network (radio access network, RAN) or an access network (access network, AN)) that supports 3GPP technologies, a user plane function (user plane function, UPF) network element 105, an access and mobility management function (access and mobility management function, AMF) network element 103, a session management function (session management function, SMF) network element 104, a policy control function (policy control function, PCF) network element 106, an application function (application function, AF) network element 109, a data network (data network, DN) 108, a network slice selection function (Network Slice Selection Function, NSSF) 111, an authentication server function (Authentication Server Function, AUSF) 110, and a unified data management function (Unified Data Management, UDM) 107.

It should be noted that the network architecture shown in FIG. 1 does not constitute a limitation on the 5G network architecture. In specific implementation, the 5G network architecture may include more or fewer network elements than those shown in the figure, or some network elements may be combined, or the like. In addition, in FIG. 1, an AN or a RAN is represented in a manner of (R)AN.

The terminal device 101 may be a user equipment (user equipment, UE), a terminal, a handheld terminal, a notebook computer, a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld (handheld) device, a laptop computer (laptop computer), a cordless phone (cordless phone) or wireless local loop (wireless local loop, WLL) station, a machine type communication (machine type communication, MTC) terminal, a handheld device or computing device having a wireless communication function, a processing device connected to a wireless modem, an unmanned aerial vehicle, an in-vehicle device, a wearable device, a terminal in an internet of things, a virtual reality device, a terminal device in a future communications system (for example, 6G) network, a terminal in a future evolved public land mobile network (public land mobile network, PLMN), or the like.

The access network device 102 is an access device for a terminal device to access the network architecture in a wireless manner, and is mainly responsible for radio resource management, quality of service (quality of service, QoS) management, data compression and encryption, and the like on an air interface side, which may be, for example, a base station NodeB, an evolved base station eNodeB, a base station in a 5G mobile communications system or a new radio (new radio, NR) communications system, or a base station in a future mobile communications system.

The UPF network element 105, the AMF network element 103, the SMF network element 104, and the PCF network element 106 are network elements of a 3GPP core network (referred to as core network elements). The UPF network element 105 may be referred to as a user plane function network element, which is mainly responsible for transmission of user data. Other network elements may be referred to as control plane function network elements, which are mainly responsible for authentication, authorization, registration management, session management, mobility management, policy control, and the like, to ensure reliable and stable transmission of user data.

The UPF network element 105 (or "UPF" for short) may be used to forward and receive data of a terminal. For example, the UPF network element may receive data of a service from a data network, and transmit the data to the terminal by using an access network device. The UPF network element may further receive user data from the terminal by using the access network device, and forward the user data to the data network. Transmission resources allocated and scheduled by the UPF network element to the terminal are managed and controlled by the SMF network element. Bearers between a terminal and the UPF network element may include: a user plane connection between the UPF network element and the access network device, and a channel established between the access network device and the terminal. The user plane connection is a quality of service (quality of service, QoS) flow (flow) that may be established between the UPF network element and the access network device for data transmission.

The AMF network element 103 (or "AMF" for short) may be used to manage access of a terminal to a core network, such as location update, network registration, and access control of a terminal, mobility management of a terminal, attachment and detachment of a terminal, and the like. In a case of providing a service for a session of the terminal, the AMF network element may further provide storage resources of a control plane for the session, so as to store a session identifier, an SMF network element identifier associated with the session identifier, and the like.

The SMF network element 104 (or "SMF" for short) may be configured to: select a user plane network element for a terminal, redirect a user plane network element for the terminal, allocate an internet protocol (internet protocol, IP) address to the terminal, establish a bearer (also referred to as a session) between the terminal and the UPF network element, modify and release a session, and control QoS.

The PCF network element 106 (or "PCF" for short) is configured to provide a policy, for example, a QoS policy, a slice selection policy, or a UE policy to the AMF network element 103 and the SMF network element 104. In some implementations, the PCF may manage delivery, update, or the like of policies.

The AF network element 109 (or "AF" for short) is used to interact with a 3GPP core network element to support routing of application-affected data, access a network exposure function, interact with a PCF network element for policy control, and so on.

The DN 108 may provide a data service for a user in an IP multi-media service (IP multi-media service, IMS) network, the Internet, or the like. The DN 108 may include a plurality of application servers (application server, AS), providing different application services, such as an operator service, internet access, or a third-party service. The AS may implement a function of an AF network element.

The NSSF 111 is configured to select a network slice and supports the following functions: selecting a set of network slice instances that serve a UE; determining allowed network slice selection assistance information (network slice selection assistance information, NSSAI), and when required, determining a mapping to subscribed single-network slice selection assistance information (single-network slice selection assistance information, S-NSSAI); determining configured NSSAI, and when required, determining a mapping to subscribed S-NSSAI; and determining a set of AMFs that may be used to query a UE, or determining a list of candidate AMFs based on a configuration.

The AUSF 110 is configured to: receive an identity authentication request from the AMF 103 for the terminal, request a key from the UDM 107, and then forward the delivered key to the AMF 103 for authentication processing.

The UDM 107 includes functions such as generation and storage of user subscription data and management of authentication data, and supports interaction with an external third-party server.

It should be understood that each network element in FIG. 1 may be a network element in a hardware device, a software function running on dedicated hardware, or a virtualized function instantiated on a platform (for example, a cloud platform). It should be noted that in the network architecture shown in the foregoing figure, network elements included in the entire network architecture are merely described as examples. The network elements included in the entire network architecture are not limited in embodiments of this application.

As introduced above, network elements related to the UE policy in the communications system may include the PCF, AMF, or the like. A UE policy configuration procedure to which embodiments of this application are applicable is introduced below with reference to FIG. 2.

### UE policy configuration procedure

FIG. 2 is a flowchart of a UE policy configuration procedure to which embodiments of this application are applicable. The method illustrated in FIG. 2 includes step S210 to step S260.

In step S210, a PCF determines whether to update the UE policy.

It should be noted that if the PCF does not need to update the UE policy, step S210 may not be included in the procedure shown in FIG. 2. If the PCF determines to update the UE policy, step S210 will be included in the procedure shown in FIG. 2. Additionally, if the PCF decides to update the UE policy, the procedure shown in FIG. 2 is also referred to as a "UE configuration update (UE configuration update, UCU)" procedure.

In step S220, the PCF transmits a communication service request to an AMF.

In some implementations, the communication service request may carry a container (container), which includes information related to the UE policy, such as content of the UE policy or an identifier of the UE policy.

The communication service request may be transmitted via N1 and N2 messages. Therefore, the communication service request may also be represented as "Namf_Communication_N1N2 Message Transfer (Namf_Communication_N1N2 Message Transfer)".

In step S230, a service request is triggered on a network side (network triggered service request) to enable the network to communicate with a UE.

In step S240, the AMF transmits the UE policy to the UE.

In some implementations, the UE policy may be encapsulated in a container, which may be a container transmitted by the PCF to the AMF. Accordingly, after receiving the container, the AMF may directly forward the container to the UE. Herein, forwarding may be understood as that no sensing is performed by the AMF or the container is not modified by the AMF.

In some other implementations, the UE policy or container may be transmitted by the AMF to the UE via a NAS message (or downlink NAS message).

In step S250, the UE transmits a UE policy transmission result to the AMF.

In some implementations, the UE policy transmission result is used to indicate whether the UE policy is successfully received by the UE.

In step S260, the AMF transmits an N1 message notification (represented as "Namf_N1MessageNotify") to the PCF to inform the PCF of the UE policy transmission result.

In some implementations, the N1 message notification may be referred to as "Manage UE policy complete (Manage UE policy complete)".

It should be noted that the steps S220 and S260 may include two messages, namely, a request and a response to the request. The method illustrated in FIG. 2 only shows requests in the two steps and does not show responses to the two requests.

In addition, as mentioned above, the PCF may transmit the container to the UE to transmit the UE policy. Conversely, the UE can also transmit a container to the PCF through the container. In this case, the container may be transmitted by the UE to the AMF via a non-access stratum (non-access stratum, NAS) message (or uplink NAS message) and then forwarded to the PCF by the AMF.

In the process shown in FIG. 2, to transmit the UE policy, a "UE policy container (UE policy container)" reason value is introduced in the downlink NAS and uplink NAS messages. For example, the UE policy container reason value may be added to a payload container (payload container). Accordingly, after obtaining the UE policy container reason value, the AMF may perform a forwarding function to forward the container to the UE or PCF.

### UE Policy

The UE policy can include a UE route selection policy (UE route selection policy, URSP), an access network discovery and selection policy (access network discovery and selection policy, ANDSP), or the like. The following uses the URSP as an example for description.

The URSP may indicate a binding relationship between application data and a protocol data unit (protocol data unit, PDU) session. Additionally, the URSP may alternatively indicate a type of a PDU session to be established by the UE to transmit application data. Generally, the URSP may include one or more URSP rules. The following introduces the URSP rules in combination with Table 1.

Referring to Table 1, the URSP rules may include one or more of the following information: rule precedence (rule precedence), traffic descriptor (traffic descriptor, TD), application descriptors (application descriptors), IP descriptors (IP descriptors), domain descriptors (domain descriptors), non-IP descriptors (Non-IP descriptors), data network name (data network name, DNN), connection capabilities (connection capabilities), and list of route selection descriptors (route selection descriptor, RSD).

It should be noted that URSP rules in the URSP have different rule precedence values. In other words, different URSP rules in the URSP correspond to different rule precedence values.

Generally, when a feature of application data matches a traffic descriptor in a URSP rule, a PDU session established based on an RSD in the URSP rule may be used to transmit the application data, that is, the application data described above is bound to the PDU session. The following introduces the RSD list in a URSP rule in combination with Table 2. Generally, the RSD list can include one or more RSDs.

**Table 1 Structure of URSP Rule**

| **Information Name** | **Description** | **Category** | **PCF permitted to modify in a UE context** | **Scope** |
|---|---|---|---|---|
| Rule precedence | Determines an order the URSP rule is enforced in the UE | Mandatory | Yes | UE Context |
| Traffic descriptor | This part defines a component of a traffic descriptor in the URSP rule. | Mandatory | | |
| Application descriptors | Consists of OSId and OSAppId | Optional | Yes | UE Context |
| IP descriptors | Destination IP 3 tuple(s) (IP address or IPv6 network prefix, port number, and protocol ID of the protocol above IP) | Optional | Yes | UE Context |
| Domain descriptors | Destination fully qualified domain name (fully qualified domain name, FQDN) | Optional | Yes | UE Context |
| Non-IP descriptors | Descriptor(s) for destination information of non-IP traffic | Optional | Yes | UE Context |
| DNN | This is matched against the DNN information provided by the application. | Optional | Yes | UE Context |
| Connection capabilities | This is matched against the information provided by a UE application when it requests a network connection with specific capabilities. | Optional | Yes | UE Context |
| List of route selection descriptors | A list of RSDs. The components of RSDs are described in Table 2. | Mandatory | | |

Referring to Table 2, an RSD may include one or more of the following information: RSD precedence (route selection descriptor precedence), route selection components (route selection components), session and service continuity mode selection (session and service continuity mode selection, SSC mode selection), network slice selection (network slice selection), DNN selection (DNN selection), PDU session type selection (PDU session type selection), non-seamless offload indication (Non-Seamless offload indication), access type preference (access type preference), route selection validation criteria (route selection validation criteria), time window (time window), and location criteria (location criteria).

It should be noted that each piece of information in an RSD may be a single value or may include a plurality of values. For example, there may be one or more values for S-NSSAI and DNN. Therefore, each RSD may correspond to one or more parameter combinations, and each parameter combination represents a set of features of a PDU session. Service data corresponding to a traffic descriptor may be transmitted in a PDU session corresponding to one of parameter value combinations of an RSD. When an application data flow described by the traffic descriptor appears, the UE may select a parameter combination based on the corresponding RSD and initiate a PDU session establishment request.

**Table 2 Structure of RSD**

| **Information Name** | **Description** | **Categor y** | **PCF permitt ed to modify in a UE context** | **Scope** |
|---|---|---|---|---|
| RSD precedence | Used to determine the order in which RSDs are to be applied | Mandato ry | Yes | UE Context |
| Route selection components | This part defines the route selection components. | Mandato ry | | |
| SSC mode selection | One single value of SSC mode | Optional | Yes | UE Context |
| Network slice selection | Either one single value or a list of values of S-NSSAI(s) | Optional | Yes | UE Context |
| DNN selection | Either one single value or a list of values of DNN(s) | Optional | Yes | UE Context |
| PDU session type selection | One single value of PDU session type | Optional | Yes | UE Context |
| Non-seamless offload indication | Indicates if the traffic of the matching application is to be offloaded to non-3GPP access outside of a PDU session | Optional | Yes | UE Context |
| Access type preference | Indicates a preferred access type (3GPP or non-3GPP or multiple access) when the UE establishes a PDU session for the matching application | Optional | Yes | UE Context |
| Route selection validation criteria | This part defines a route validation criteria component. | Optional | | |
| Time window | Time window permitted to match a service, where if a current time is not within the time window, the RSD is considered invalid. | Optional | Yes | UE Context |
| Location criteria | A UE location permitted to match a service, where if the UE location does not match the location criteria, the RSD is considered invalid. | Optional | Yes | UE Context |

### Method for using URSP

A purpose of the URSP is to enable a terminal to associate different services with corresponding PDU sessions for transmission based on a URSP rule. The association process may include step 1 and step 2.

In step 1, a URSP corresponding to the public land mobile network (public land mobile network, PLMN) is determined to be used.

Generally, in selecting the URSP corresponding to the PLMN, the following precedence order may be used: a URSP corresponding to a registered PLMN takes precedence over a URSP corresponding to an equivalent PLMN of the registered PLMN. Additionally, the URSP corresponding to the equivalent PLMN of the registered PLMN takes precedence over a URSP corresponding to an HPLMN (or non-VPLMN).

In step 2, the URSP is used to perform an evaluation (evalution) process.

Generally, a process of finding a suitable PDU session for a service based on the URSP is called the evaluation process. In some implementations, when a new service appears and needs to transmit data, the terminal needs to determine a user plane connection (for example, a PDU session) to which data of the service binds for transmission. To do this, the terminal checks, by using the URSP, if a feature of the service matches a traffic descriptor (Traffic Descriptor, TD) of one of rules in the URSP. An order of checking is determined based on precedence (precedence) of TDs in the URSP, that is, the terminal checks a matching status based on the order of precedence. When a URSP corresponding to a TD is matched, binding of a PDU session may be performed by using an RSD list in the URSP.

In some implementations, when the URSP corresponding to the TD matches the service, the terminal looks for a suitable PDU session according to a precedence order in the RSD. Herein, an RSD with higher precedence may be used first. If a specific parameter in the RSD has one or more values, the terminal may select one value of the parameter and combine another parameter to check whether a PDU session exists.

In some implementations, if the PDU session exists, the service may be bound to the PDU session. Conversely, if the PDU session does not exist, the terminal triggers establishment of the PDU session and carries an attribute parameter of the requested PDU session in a PDU session establishment request message.

In some implementations, if the PDU session is successfully established, the terminal binds the service to the PDU session. Conversely, if the PDU session fails to be established, the terminal selects another value of a parameter in the RSD and combines another parameter to check again whether a PDU session exists.

In some implementations, if no suitable PDU session can be found for binding after traversal of URSPs, the terminal may check, according to the precedence order, whether a TD in a URSP with a next-lower priority can match a data flow feature of the service. When the TD in the URSP with a next-lower priority matches the service, the foregoing evaluation process is repeated.

In some scenarios, after the foregoing evaluation process, once the terminal determines a PDU session matching the service, the terminal may still re-execute the evaluation process. In some implementations, in one or more of the following cases, the terminal may re-execute the evaluation process to determine whether a binding relationship between a service and a PDU session needs to be changed.

In some implementations, the foregoing cases may include that: a PCF updates a URSP; the terminal moves from an EPC to a 5GS; allowed NSSAI or configured NSSAI changes; availability of an LADN DNN changes; the terminal registers over 3GPP access or non-3GPP access (UE registers over 3GPP or non-3GPP access); and the terminal establishes a connection with WLAN access.

### Service transmission based on multiple access modes

FIG. 3 is a schematic diagram of service transmission performed based on multiple access modes to which embodiments of this application are applicable. Referring to FIG. 3, a current 3GPP system supports a multi-access PDU (Multi-Access PDU, MA-PDU) session mode based on combination of 3GPP access and non-3GPP access. That is to say, a terminal may simultaneously access a core network through 3GPP access and non-3GPP access and transmit a data packet via 3GPP access or non-3GPP access.

For example, the terminal may access a 3GPP access network, where the 3GPP access network may communicate with a UPF 1 via an interface N3. Accordingly, the UPF 1 may communicate with a server via a UPF PSA, where the UPF 1 communicates with the UPF PSA via an interface N9, and the UPF PSA communicates with the server via an interface N6.

The terminal may access a non-3GPP access network. Accordingly, the non-3GPP access network may communicate with a UPF 2 via a non-3GPP interworking function (non-3gpp interworking function, N3IWF), where an N3IWF communicates with the UPF 2 via an interface N3. The UPF 2 may communicate with a server via a UPF PSA, where the UPF 2 communicates with the UPF PSA via an interface N9, and the UPF PSA communicates with the server via the interface N6.

In some implementations, 3GPP access may include one or more of the following: an NR terrestrial network radio access technology, evolved UMTS terrestrial radio access E-UTRA, or an NR satellite access technology. The NR satellite access technology may include one or more of the following: an NR geostationary earth orbit GEO radio access technology, an NR medium earth orbit MEO satellite radio access technology, or an NR low earth orbit LEO satellite. In some other implementations, non-3GPP access may include an access mode based on wireless fidelity (wireless fidelity, WiFi).

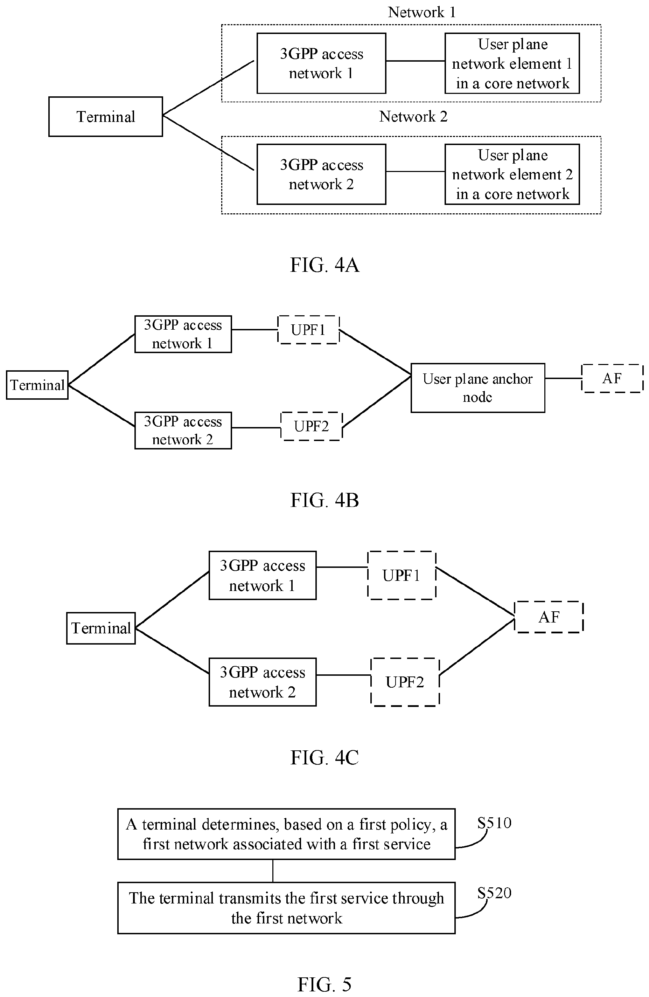

In some scenarios, a terminal may simultaneously access a plurality of networks and perform service transmission by using user plane connections in the plurality of networks, which is also known as a multi-access scenario. For example, referring to FIG. 4A, a terminal may simultaneously access a 3GPP access network 1 and a 3GPP access network 2, and perform service transmission with a user plane network element 1 in a core network via the 3GPP access network 1, service transmission with a user plane network element 2 in the core network via the 3GPP access network 2. However, in existing technologies, how a terminal uses a plurality of networks to perform service transmission has not been specified, resulting in low efficiency of the terminal in accessing the plurality of networks for service transmission.

The applicant has found that transmission performance of different networks varies. Therefore, to improve efficiency of service transmission, different services can be transmitted in different networks. For example, if a service transmission delay in a network 1 is lower than that in a network 2, and a transmission delay required by a service 1 is less than that required by a service 2, then the network 1 may be used to transmit the service 1, and the network 2 may be used to transmit the service 2. However, how to determine a network suitable for transmitting a service is an urgent problem to be solved.

Therefore, in view of the problem, the applicant proposes a wireless communication method. In the method, a first policy is introduced, where the first policy includes a first association relationship between a service and a network. In this way, the terminal may determine, based on the first association relationship, a first network associated with a first service, and transmit the first service through the first network, to improve service transmission efficiency in a multi-access scenario.

In some scenarios, embodiments of this application are applicable to a system architecture shown in FIG. 4A, and also applicable to other architectures, which are introduced in combination with FIG. 4B and FIG. 4C.

As shown in FIG. 4B, a terminal may simultaneously access a 3GPP access network 1 and a 3GPP access network 2, and perform service transmission with a UPF 1 through the 3GPP access network 1, and perform service transmission with a UPF 2 through the 3GPP access network 2. The UPF 1 and UPF 2 perform service transmission with an AF through a user plane anchor node (for example, an anchor UPF).

When uplink service data is transmitted based on the architecture shown in FIG. 4B, the uplink service data transmitted through the UPF 1 and UPF 2 may be aggregated at the user plane anchor node and then transmitted to the AF. Conversely, when downlink service data is transmitted based on the architecture shown in FIG. 4B, the downlink service data may be split at the user plane anchor node and transmitted to the terminal through the UPF 1 and UPF 2, respectively. In this scenario, user plane connections corresponding to a plurality of 3GPP access networks connected to the terminal may correspond to a same IP address. Accordingly, for the AF, there is no need to distinguish between the plurality of 3GPP access networks accessed by the terminal. The AF may perform service data transmission with the terminal by using only one IP address, which helps reduce complexity of transmitting service data by the AF.

As shown in FIG. 4C, a terminal may simultaneously access a 3GPP access network 1 and a 3GPP access network 2, and perform service transmission with a UPF 1 through the 3GPP access network 1, and perform service transmission with a UPF 2 through the 3GPP access network 2. The UPF 1 and UPF 2 perform service transmission with an AF, that is to say, the UPF 1 and UPF 2 do not need to perform service transmission with the AF through a user plane anchor node.

Based on the architecture shown in FIG. 4C, it can be learned that user plane connections corresponding to the 3GPP access network 1 and the 3GPP access network 2 correspond to different UPFs. In this case, the two user plane connections correspond to different IP addresses. Accordingly, when transmitting or receiving service data, the AF needs to identify IP addresses corresponding to different user plane connections. In a network topology shown in FIG. 4C, there is no need to associate a plurality of 3GPP accesses to a same user plane anchor node, which helps reduce complexity of the system.

It should be noted that scenarios in which a terminal performs communication based on a plurality of user plane connections in embodiments of this application are described above in combination with FIG. 4A to FIG. 4C. In some implementations, a plurality of user plane connections may correspond to one PDU session, or in other words, a plurality of user plane connections may correspond to a same PDU session. In some other implementations, a plurality of user plane connections may correspond to different PDU sessions. For example, all user plane connections in the plurality of user plane connections correspond to different PDU sessions. For another example, some user plane connections in the plurality of user plane connections may correspond to different PDU sessions, while the remaining user plane connections may correspond to a same PDU session.

A wireless communication method according to an embodiment of this application is described below in combination with FIG. 5. The method illustrated in FIG. 5 includes steps S510 and S520.

In step S510, a terminal determines, based on a first policy, a first network associated with a first service, where the first policy includes a first association relationship between a service and a network.

In embodiments of this application, the network is not limited. In some implementations, the network may be a wireless network. For example, the network may be a PLMN. For another example, the network may be a non-public network (non-public networks, NPN). For another example, the network may be a standalone non-public network (Stand-alone NPN, SNPN). Certainly, the network may alternatively be another network introduced in a future communications system.

In step S520, the terminal transmits the first service through the first network.

In some implementations, the first association relationship may indicate that the first service is associated with one network (namely, the first network). In some other implementations, the first association relationship may indicate that the first service is associated with a plurality of networks, where the plurality of networks include the first network.

In some implementations, the plurality of networks correspond to different priorities, where the priorities corresponding to the plurality of networks are used to indicate a precedence order for transmitting the first service through corresponding networks. It is assumed that the first association relationship indicates that the first service is associated with a network 1 and a network 2, where a priority corresponding to the network 2 is higher than a priority corresponding to the network 1. In this case, the first service is preferentially transmitted through the network 2.

In embodiments of this application, the first association relationship may be presented in a form of a list. In this case, the priorities corresponding to the plurality of networks may be arranged in descending order according to a presentation order in the list. Certainly, the priorities corresponding to the plurality of networks may alternatively be arranged in ascending order according to a presentation order in the list, which will be introduced below in combination with Table 4.

Certainly, in embodiments of this application, there may be no priority distinction among the plurality of networks associated with the first service. In this case, one network may be selected from the plurality of networks to transmit the first service. For example, one network may be randomly selected from the plurality of networks to transmit the first service. For another example, a network for transmitting the first service may be selected based on a busyness level of the plurality of networks, which is not limited in embodiments of this application.

In some implementations, the network includes a PLMN. If the first association relationship indicates that the first service is associated with a plurality of networks, and the first network among the plurality of networks is a registered PLMN or an equivalent PLMN, then the first network is used for transmitting the first service. That is to say, if the first association relationship indicates that PLMNs associated with the first service include a registered PLMN or an equivalent PLMN, then the first service is preferentially transmitted through the registered PLMN or the equivalent PLMN, to simplify a process of selecting a network by the terminal.

In an example in which the plurality of networks associated with the first service include a first network and a second network, the first network is a registered PLMN or an equivalent PLMN, and a priority corresponding to the second network is higher than a priority corresponding to the first network. In this case, the first service is preferentially transmitted through a first PLMN.

In some implementations, the first association relationship indicates that a plurality of services are associated with the first network, and the plurality of services include the first service. That is to say, the first network may be associated with a plurality of services. Certainly, in embodiments of this application, the first network may be associated with one service.

In embodiments of this application, an indication manner for the network in the first policy is not limited. In some implementations, the network may be represented by an identity of the network. In an example in which the network is a PLMN, the identity of the network may be a PLMN ID. In an example in which the network is an NPN, the identity of the network may be an NPN ID. In an example in which the network is an SNPN, the identity of the network may be an SNPN ID.

In addition, in embodiments of this application, a service type in the first policy is not limited. In some implementations, the service type may include one or more of the following: an IMS service, a voice service, an SMS service, a video service, an internet access service, an FTP file transfer service, a WeChat service, or a Weibo service.

In some implementations, a service in the first policy may be represented by a traffic descriptor (traffic descriptor, TD).

**Table 3**

| | |
|---|---|
| **Traffic descriptor** | This part is used to define a traffic descriptor in the first policy. |
| IP descriptors | Used to describe the destination IP triplet including: IP address or IPv6 network prefix; port number; and protocol ID of the protocol above IP |
| Domain descriptors | Used to describe a fully qualified domain name or regular expression as a domain name matching criterion |
| Non-IP descriptors | Used to describe destination information of a non-IP service |
| DNN | This DNN matches DNN information of a service. |
| Connection capabilities | This is matched against information provided when a terminal's service requests a network connection with specific capabilities. |
| PIN ID | This PIN ID matches a PIN ID of a specific PIN configured in PEGC. |
| Connectivity group ID | This is matched against a connectivity group ID of a specific connectivity group in a 5G-RG. |

As shown in Table 3, the traffic descriptor may include one or more of the following parameters: IP descriptors (IP descriptors); domain descriptors (domain descriptors); Non-IP descriptors (Non-IP descriptors); DNN information; connection capabilities (connection capabilities); PIN ID; and connectivity group ID (connectivity group ID).

In some implementations, the IP descriptors are used to indicate a destination IP triplet. For example, the destination IP triplet may include: IP address (IP address) or IPv6 network prefix (IPv6 network prefix); port number (port number); and protocol ID of the protocol above IP (protocol ID of the protocol above IP).

In some implementations, the domain descriptors are used to describe a fully qualified domain name (Fully qualified domain name, FQDN) or a regular expression (regular expression).

In some implementations, the Non-IP descriptors are used to describe destination information for non-IP services.

In some implementations, the DNN information matches DNN information of a service.

In some implementations, the connection capabilities match the information provided when the terminal's service requests a network connection with specific capabilities.

In some implementations, the PIN ID matches a PIN ID of a specific PIN configured in PEGC.

In some implementations, the connectivity group ID matches a connectivity group ID of a specific connectivity group in a 5G-RG.

In some scenarios, the terminal may be configured with a plurality of universal subscriber identity modules (universal subscriber identity module, USIMs). For example, the terminal may connect to a plurality of different networks through a plurality of USIM connections, or in other words, the terminal has initiated a plurality of registration requests, or the terminal has a plurality of SUPIs. In this case, the terminal may transmit the first service through the first network by using a first USIM among the plurality of USIMs. Certainly, the solutions in embodiments of this application may also be applied to a terminal configured with only one USIM.

In some implementations, the first USIM may be determined based on an association relationship between a USIM and a network. For example, the first USIM may be determined as a first USIM associated with an identity of the first network based on the identity of the first network and an association relationship between a USIM and a network identity. That is to say, the step S520 includes: selecting, from the plurality of USIMs by the terminal based on the first network and an association relationship between the plurality of USIMs and networks, the first USIM associated with the first network; and transmitting, by the terminal, the first service through the first network by using the first USIM.

In embodiments of this application, the first network is associated with the first USIM, or in other words, the first network has an association relationship with the first USIM, which may be understood as that the first network is a registered network of the first USIM, or a registration request is transmitted to the first network through the first USIM. Certainly, in embodiments of this application, the association between the first network and the first USIM may also be understood as that an SUPI of the first USIM includes an identity of the first network. In an example in which the first network is a first PLMN, the association between the first PLMN and the first USIM may be understood as that the SUPI of the first USIM includes a PLMN ID of the first PLMN.

In some implementations, the first policy includes a second association relationship between a service and a preemption priority, where the preemption priority indicates a priority for the service to occupy an associated network for transmission; or in other words, the preemption priority indicates a priority for the service to preempt an associated network for transmission, or the preemption priority indicates an order in which services preempt an associated network for transmission.

For example, a network 1 is associated with a service 1 and a service 2, and a preemption priority associated with the service 1 is lower than a preemption priority associated with the service 2. Assuming that the terminal cannot simultaneously transmit the service 1 and the service 2 through the network 1, during transmission of the service 1 through the network 1 by the terminal, if data of the service 2 needs to be transmitted, the terminal preferentially transmits the data of the service 2 through the network 1. For a reason why the terminal cannot simultaneously transmit the service 1 and the service 2 through the network 1, reference may be made to the description below in combination with a first condition.

For another example, a network 1 is associated with a service 1, a network 2 is associated with a service 2, and a preemption priority associated with the service 1 is lower than a preemption priority associated with the service 2. Assuming that the terminal cannot simultaneously transmit the service 1 and the service 2, during transmission of the service 1 through the network 1 by the terminal, if data of the service 2 needs to be transmitted, the terminal preferentially transmits the data of the service 2 through the network 2. For a reason why the terminal cannot simultaneously transmit the service 1 and the service 2 through the network 1, reference may be made to the description below in combination with a first condition.

In embodiments of this application, the second association relationship is introduced in the first policy to indicate a preemption priority associated with a service, which helps improve properness of determining an order in which different services are transmitted at the terminal.

In some implementations, the second association relationship indicates that a preemption priority of a second service is higher than a preemption priority of the first service. When a first condition is satisfied, transmission of the second service may preempt a resource of the first service, or in other words, when the first condition is satisfied, the second service is preferentially transmitted through a second network. The resource may include related resources for the terminal to transmit services, for example, the resource may include a user plane connection of the terminal.

In some implementations, the first condition includes one or more of the following: the terminal does not support simultaneously transmitting the first service on the first network and transmitting the second service on the second network; the terminal does not support simultaneously transmitting the first service and the second service through a plurality of RATs; in a process of the terminal performing simultaneous transmission through a plurality of networks, a quantity of the plurality of networks has reached an upper limit of a quantity of networks supported by the terminal for simultaneous transmission; or in a process of the terminal performing simultaneous transmission through a plurality of RATs, a quantity of the plurality of RATs has reached an upper limit of a quantity of RATs supported by the terminal for simultaneous transmission.

In embodiments of this application, a manner for preferentially transmitting the second service through the second network is not limited. For example, preferentially transmitting the second service through the second network may include stopping transmission of the first service through the first network, and transmitting the second service through the second network. For another example, preferentially transmitting the second service through the second network may include suspending transmission of the first service through the first network and transmitting the second service through the second network; and later, after the transmission of the second service is completed, resuming a transmission process of the first service.

In embodiments of this application, a manner for setting a level of preemption priority is not limited. In some implementations, the preemption priority may be set to a plurality of levels. For example, the preemption priority may include a high level, a medium level, and a low level. For another example, the preemption priority may include a high level and a low level.

In some implementations, the first policy includes a third association relationship between a network and a RAT type. Different networks may support different types of RATs. Therefore, introducing the third association relationship in the first policy helps the terminal obtain RAT types associated with different networks.

In embodiments of this application, the RAT type is not limited. In some implementations, the RAT type may include one or more of the following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

In some implementations, the third association relationship may indicate that the first network is associated with one RAT type. In some other implementations, the third association relationship may indicate that the first network is associated with a plurality of RAT types.

In some implementations, the plurality of RAT types correspond to different priorities, where the priorities corresponding to the plurality of RAT types are used to indicate priorities for accessing the network with associated RAT types. It is assumed that the third association relationship indicates that a network 1 is associated with a RAT type 1 and a RAT type 2, where a priority corresponding to the RAT type 2 is higher than a priority corresponding to the RAT type 1. In this case, the first service preferentially accesses the network 1 based on the RAT type 2.

In embodiments of this application, the third association relationship may be presented in a form of a list. In this case, the priorities corresponding to the plurality of RAT types may be arranged in descending order according to a presentation order in the list. Certainly, the priorities corresponding to the plurality of RAT types may alternatively be arranged in ascending order according to a presentation order in the list, which will be introduced below in combination with Table 4.

Certainly, in embodiments of this application, there may be no priority distinction among the plurality of RAT types associated with the first network. In this case, one RAT type may be selected from the plurality of RAT types to access the first network. For example, one RAT type may be randomly selected from the plurality of RAT types to access the first network. For another example, a currently available RAT type may be selected from the plurality of RAT types to access the first network, which is not limited in embodiments of this application.

In some scenarios, the terminal may be configured with a plurality of USIMs. For example, the terminal may connect to a plurality of different networks through a plurality of USIM connections, or in other words, the terminal has initiated a plurality of registration requests, or the terminal has a plurality of SUPIs. In this case, the terminal may select, from the plurality of USIMs based on the RAT type associated with the first network and the association relationship between a USIM and a RAT type, a first USIM associated with the RAT type of the first network.

In some implementations, the terminal includes a plurality of USIMs. The step S520 includes: selecting, from the plurality of USIMs by the terminal based on the RAT type associated with the first network and an association relationship between a USIM and a RAT type, the first USIM associated with the RAT type associated with the first network; and transmitting, by the terminal, the first service through the first network by using the first USIM.

In embodiments of this application, the RAT type of the first network is associated with the first USIM, or in other words, there is an association relationship between the RAT type and the first USIM, which may be understood as that the first USIM performs registration and/or establishes a user plane connection by using the RAT type associated with the first network.

In some implementations, the first policy includes a fourth association relationship between a network and a system type. Different networks may support different system types. Therefore, introducing the fourth association relationship in the first policy helps the terminal obtain system types associated with different networks.

In some implementations, the system type is also referred to as a "network type," where the network type may include a 5G system (5G system, 5GS) and an evolved packet system (evolved packet system, EPS). In an example in which the system type is used to indicate a type of non-access stratum NAS messages in a network, the type of NAS messages may include an NAS message type based on a 5GS and a NAS message type based on an EPS. Certainly, in embodiments of this application, the system type may alternatively include a type of a core network in the network.

In some implementations, the terminal includes a plurality of USIMs. The step S520 includes: selecting, from the plurality of USIMs by the terminal based on the system type associated with the first network and an association relationship between a USIM and a system type, the first USIM associated with the system type associated with the first network; and transmitting, by the terminal, the first service through the first network by using the first USIM.

In embodiments of this application, the RAT type of the first network is associated with the first USIM, which may be understood as that the first USIM performs registration and/or establishes a user plane connection by using the RAT type associated with the first network.

The first association relationship to the fourth association relationship in embodiments of this application are described above. In embodiments of this application, the association relationships in the foregoing embodiments may be used individually or in combination. If the first association relationship and the third association relationship are used in combination, the first association relationship may be combined with the third association relationship, that is, the first association relationship includes an association relationship between a service and a network, and the second association relationship includes an association relationship between a network and a RAT type. Accordingly, combination of the first association relationship and the third association relationship may be used to represent an association relationship between a service, a network, and a RAT type. In this case, the third association relationship may be replaced with an association relationship between a service and a RAT type.

If the first association relationship and the fourth association relationship are used in combination, the first association relationship may be combined with the fourth association relationship, that is, the first association relationship includes an association relationship between a service and a network, and the fourth association relationship includes an association relationship between a network and a system type. Accordingly, combination of the first association relationship and the fourth association relationship may be used to represent an association relationship between a service, a network, and a system type. In this case, the fourth association relationship may be replaced with an association relationship between a service and a system type.

It should be noted that association relationships in the first association relationship to the fourth association relationship may be combined arbitrarily, and the combination manners are similar to those described above. For brevity, details are not described below.

For ease of understanding, the following describes the first policy in embodiments of this application in combination with Table 4 by using an example in which the first policy includes the first association relationship to the fourth association relationship.

**Table 4**

| Service | Network | Preemption priority | RAT type | System type |
|---|---|---|---|---|
| Service 1 | PLMN 1; and PLMN 2 | 1 | NR terrestrial network RAT, E-UTRA, and satellite-based RAT | 5GS, and EPS |
| Service 2 | PLMN2 | 3 | E-UTRA, and satellite-based RAT | / |
| Service 3 | NPN 1; and PLMN 1 | 5 | NR terrestrial network RAT | / |

As shown in Table 4, in the first association relationship included in the first policy, the service 1 is associated with the PLMN 1 and the PLMN 2, and a priority of the PLMN 1 is higher than a priority of the PLMN 2. The service 2 is associated with the PLMN 2. The service 3 is associated with the NPN 1 and the PLMN 1, and a priority of the NPN 1 is higher than a priority of the PLMN 1.

In the second association relationship included in the first policy, a preemption priority associated with the service 1 is level 1, a preemption priority associated with the service 2 is level 3, and a preemption priority associated with the service 3 is level 5. Generally, a smaller level value of the preemption priority indicates a higher preemption priority. That is to say, the preemption priority associated with the service 1 is higher than the preemption priority associated with the service 2, and the preemption priority associated with the service 2 is higher than the preemption priority associated with the service 3.

In the third association relationship included in the first policy, RAT types of networks associated with the service 1 include an NR terrestrial network RAT, an E-UTRA, and a satellite-based RAT; RAT types of networks associated with the service 2 include an E-UTRA and a satellite-based RAT; and a RAT type of a network associated with the service 3 includes an NR.

In the fourth association relationship included in the first policy, RAT types of networks associated with the service 1 include a 5GS and an EPS. The system types of the networks associated with the service 2 and service 3 are not limited.

As described above, one service may correspond to a plurality of networks. In this case, association relationship between the service and the plurality of networks may be represented as an independent row in a list representing the first policy. For example, as shown in Table 4, an association relationship between the service 1 and the PLMN 1 and an association relationship between the service 1 and the PLMN 2 may be represented as one row in the list. Certainly, in embodiments of this application, the association relationship between the service and the plurality of networks may occupy a plurality of rows in the list representing the first policy. For example, the association relationship between the service 1 and the PLMN 1 may be represented as one row in the list, and the association relationship between the service 1 and the PLMN 2 may be represented as another row in the list. That is, the association relationship between the service 1 and the networks (PLMN 1 and PLMN 2) may occupy two independent rows.

Additionally, the above description is provided by using a presentation manner of the first association relationship in the list as an example. In embodiments of this application, a presentation manner of one or more of the second association relationship, the third association relationship, or the fourth association relationship in the list may be similar to the presentation manner of the first association relationship described above. For brevity, details are not described below.

As described above, the third association relationship and/or the fourth association relationship may be carried in the first policy, which helps reduce modifications to a legacy UE policy, so as to be compatible with a legacy communication procedure. In some other scenarios, the third association relationship and/or the fourth association relationship may be carried in a UE policy to align with a purpose of introducing the UE policy in a legacy communication procedure. In this case, the UE policy carrying the third association relationship and/or the fourth association relationship may also be referred to as an "enhanced UE policy." In an example in which the UE policy is a URSP, a URSP carrying the third association relationship and/or the fourth association relationship may be referred to as an "enhanced URSP."

It should be understood that, at least one of the third association relationship or the fourth association relationship carried in the UE policy is the same as the third association relationship or the fourth association relationship carried in the first policy, and reference may be made to the foregoing description. The following mainly introduces a carrying manner of the third association relationship and/or the fourth association relationship in the UE policy.

In some implementations, at least one of the third association relationship or the fourth association relationship is carried in a route selection descriptor RSD of the URSP. For example, at least one of the third association relationship or the fourth association relationship is carried in access type preference information of the RSD, which will be described below in combination with Table 5. For another example, at least one of the third association relationship or the fourth association relationship is dedicated information in the RSD, which will be described below in combination with Table 6. It should be noted that, for the description of other parameters in the RSD, reference may be made to Table 2 mentioned above. The following mainly introduces a carrying manner of the third association relationship and/or the fourth association relationship in combination with Table 5 and Table 6.

As shown in Table 5, assuming that the RAT type 1 includes a satellite-based RAT, the system type 1 includes a 5GS, and the RSD shown in Table 5 belongs to a URSP matching the service 1, then access type preference of the RSD indicates that a RAT type of a network associated with the service 1 is satellite-based RAT, and a system type of the network associated with the service 1 is the 5GS.

As shown in Table 6, assuming that the RAT type 1 includes a satellite-based RAT, the system type 1 includes a 5GS, and the RSD shown in Table 6 belongs to a URSP matching the service 1, then dedicated information "RAT type" may be newly introduced in the RSD to indicate that the RAT type of the network associated with the service 1 is the satellite-based RAT. Additionally, dedicated information "system type" may be newly introduced in the RSD to indicate that the system type of the network associated with the service 1 is the 5GS.

It should be noted that the dedicated information may be a single piece of information. That is, one piece of dedicated information may be newly introduced in the RSD to simultaneously indicate "RAT type" and "system type."

**Table 5**

| **Information Name** | **Description** | **Category** | **PCF permitted to modify in a UE context** | **Scope** |
|---|---|---|---|---|
| RSD precedence | Used to determine the order in which RSDs are to be applied | Mandatory | Yes | UE Context |
| Route selection components | This part defines the route selection components. | Mandatory | | |
| SSC mode selection | One single value of SSC mode | Optional | Yes | UE Context |
| Network slice selection | Either one single value or a list of values of S-NSSAI(s) | Optional | Yes | UE Context |
| DNN selection | Either one single value or a list of values of DNN(s) | Optional | Yes | UE Context |
| PDU session type selection | One single value of PDU session type | Optional | Yes | UE Context |
| Non-seamless offload indication | Indicates if the traffic of the matching application is to be offloaded to non-3GPP access outside of a PDU session | Optional | Yes | UE Context |
| **Access type preference** | **Indicates a preferred access type** (3GPP or non-3GPP or multiple access) **when the UE establishes a PDU session for the matching application; and RAT type 1 and system type 1** | Optional | Yes | UE Context |
| Route selection validation criteria | This part defines a route validation criteria component. | Optional | | |
| Time window | Time window permitted to match a service, where if a current time is not within the time window, the RSD is considered invalid. | Optional | Yes | UE Context |
| Location criteria | A UE location permitted to match a service, where if the UE location does not match the location criteria, the RSD is considered invalid. | Optional | Yes | UE Context |

**Table 6**

| **Information Name** | **Description** | **Category** | **PCF permitted to modify in a UE context** | **Scope** |
|---|---|---|---|---|
| RSD precedence | Used to determine the order in which RSDs are to be applied | Mandatory | Yes | UE Context |
| Route selection components | This part defines the route selection components. | Mandatory | | |
| SSC mode selection | One single value of SSC mode | Optional | Yes | UE Context |
| Network slice selection | Either one single value or a list of values of S-NSSAI(s) | Optional | Yes | UE Context |
| DNN selection | Either one single value or a list of values of DNN(s) | Optional | Yes | UE Context |
| PDU session type selection | One single value of PDU session type | Optional | Yes | UE Context |
| Non-seamless offload indication | Indicates if the traffic of the matching application is to be offloaded to non-3GPP access outside of a PDU session | Optional | Yes | UE Context |
| Access type preference | Indicates a preferred access type (3GPP or non-3GPP or multiple access) when the UE establishes a PDU session for the matching application | Optional | Yes | UE Context |
| Route selection validation criteria | This part defines a route validation criteria component. | Optional | | |
| Time window | Time window permitted to match a service, where if a current time is not within the time window, the RSD is considered invalid. | Optional | Yes | UE Context |
| Location criteria | A UE location permitted to match a service, where if the UE location does not match the location criteria, the RSD is considered invalid. | Optional | Yes | UE Context |
| **RAT type** | **RAT type 1** | **Optional** | **Yes** | **UE Context** |
| **System Type** | **5GS** | **Optional** | **Yes** | **UE Context** |

The first policy and the enhanced UE policy in embodiments of this application are described above. The following describes a usage process of the first policy and the enhanced UE policy in embodiments of this application.

In some implementations, assuming that the third association relationship is carried in the first policy, the method further includes: determining, by the terminal based on the third association relationship, a RAT type associated with the first network; and the step S520 includes: accessing, by the terminal, the first network based on the RAT type associated with the first network to transmit the first service.

In some implementations, assuming that the fourth association relationship is carried in the first policy, before step S520, the method further includes: determining, by the terminal based on the fourth association relationship, a system type associated with the first network.

In some implementations, the first association relationship indicates that the first service is associated with the first network and a second network. The step S520 includes: transmitting, by the terminal, the first service through the first network in a case that a second condition is satisfied, where the second condition includes one of the following: the first service does not match any URSP rule corresponding to the second network; or the first service fails to be transmitted through a PDU session corresponding to any RSD in a matching URSP rule corresponding to the second network. The matching URSP rule may be understood as a URSP rule that matches the first service.

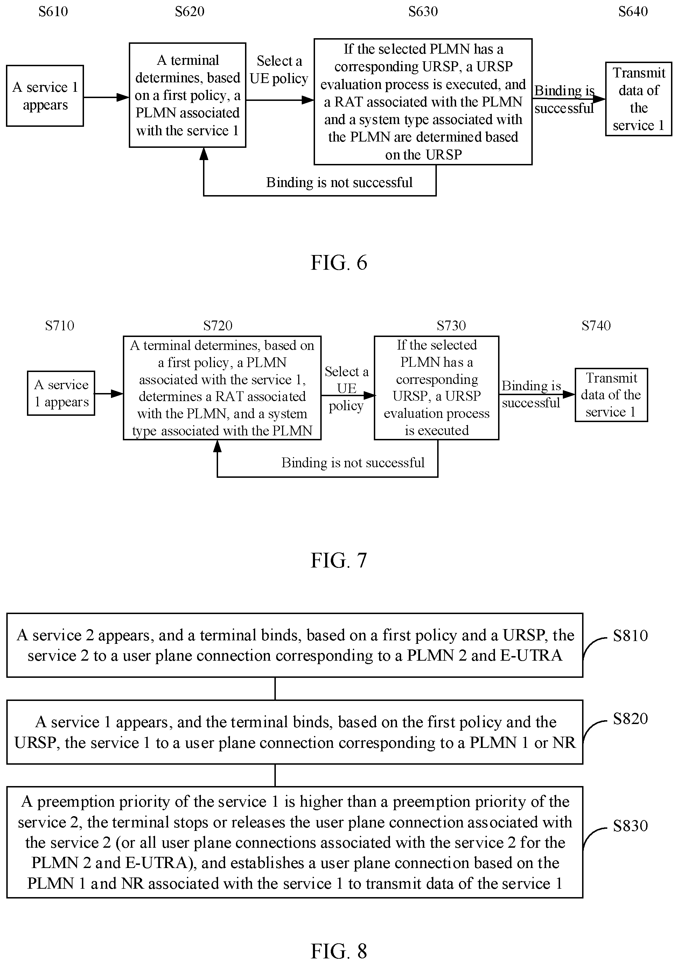

For ease of understanding, the following describes a method of using the first policy in embodiments of this application with reference to FIG. 6. Assuming that the third association relationship and the fourth association relationship are carried in a URSP, as shown in FIG. 6, the method includes step S610 to S640.

In step S610, a service 1 appears.

In some implementations, that the service 1 appears may be understood as the service 1 being activated, or data for the service 1 is about to be transmitted, or a user plane connection used to transmit data for the service 1 has not yet been determined.

In step S620, a terminal determines, based on a first policy, a PLMN associated with the service 1.

In some implementations, as shown in FIG. 4, the service 1 is associated with a PLMN 1 and a PLMN 2, and a priority of the PLMN 1 is higher than a priority of the PLMN 2. Therefore, the terminal preferentially selects the PLMN 1 as the PLMN associated with the service 1.

In step S630, if the selected PLMN has a corresponding URSP, a URSP evaluation process is executed, and a RAT associated with the PLMN and a system type associated with the PLMN are determined based on the URSP.

In the URSP evaluation process, if there is a URSP rule that can match the service 1 in all URSP rules corresponding to the selected PLMN or in non-match-all (match-all) URSP rules, an appropriate RAT is selected based on a RAT type included in an RSD in the URSP rules, and the data of the service 1 is transmitted by using a PDU session (or user plane connection) corresponding to the RSD in the matching URSP rule based on the RAT. That is, the service 1 is successfully bound to the PDU session, and step S640 is executed.

It should be noted that the PDU session may be a PDU session that has already been established or a PDU session to be established.

In the URSP evaluation process, if any of the following cases occurs, the binding of the service 1 to the PDU session fails. Accordingly, the terminal selects the PLMN 2 with a next-lower priority according to the first policy and re-executes steps S620 and S630, that is, performs URSP evaluation based on a URSP corresponding to the PLMN 2.

Case 1: The selected PLMN has no corresponding URSP.

Case 2: In the URSP evaluation process, none of the corresponding all URSP rules or non-match-all URSP rules can match the service 1.

Case 3: In the URSP evaluation process, data cannot be transmitted by using the PDU session corresponding to the RSD in the matching URSP rules, or a PDU session cannot be established based on the corresponding RSD in the matching URSP rule.

In some implementations, assuming that at least one of the third association relationship or the fourth association relationship is carried in a UE policy, the method includes: determining, by the terminal based on the UE policy, a radio access technology RAT type associated with the first network, where the UE policy includes an association relationship between the network and a RAT type (for example, the third association relationship described above); and/or determining, by the terminal based on the UE policy, a system type associated with the first network, where the UE policy includes an association relationship between the network and a system type, and the system type indicates a type of a core network and/or a type of a non-access network in an associated network (for example, the fourth association relationship described above).

In some implementations, in a case that a URSP corresponding to the first network matches the first service, the first service is transmitted through a first PDU session, and the first PDU session corresponds to an RSD in the URSP corresponding to the first network. That is to say, the first policy may be used in combination with a legacy URSP, which helps improve compatibility of the first policy with legacy a communication procedure. Certainly, in embodiments of this application, the first policy may be used alone.

In some implementations, the first association relationship indicates that the first service is associated with the first network and a second network. The step S520 includes: transmitting, by the terminal, the first service through the first network in a case that a second condition is satisfied, where the second condition includes one of the following: the first service does not match any URSP rule corresponding to the second network; or the first service fails to be transmitted through a PDU session corresponding to an RSD in a matching URSP rule that corresponds to the second network.

For ease of understanding, the following describes a method of using the first policy in embodiments of this application with reference to FIG. 7. Assuming that the third association relationship and the fourth association relationship are carried in a URSP, as shown in FIG. 7, the method includes steps S710 to S740.

In step S710, a service 1 appears.

In some implementations, that the service 1 appears may be understood as the service 1 being activated, or data for the service 1 is about to be transmitted, or a user plane connection used to transmit data for the service 1 has not yet been determined.

In step S720, a terminal determines, based on a first policy, a PLMN associated with the service 1, determines a RAT associated with the PLMN, and a system type associated with the PLMN.

In some implementations, as shown in FIG. 4, the service 1 is associated with a PLMN 1 and a PLMN 2, and a priority of the PLMN 1 is higher than a priority of the PLMN 2. Therefore, the terminal preferentially selects the PLMN 1 as the PLMN associated with the service 1.

In step S730, if the selected PLMN has a corresponding URSP, a URSP evaluation process is executed.

In the URSP evaluation process, if there is a URSP rule that can match the service 1 in all URSP rules corresponding to the selected PLMN or in non-match-all (match-all) URSP rules, data of the service 1 is transmitted by using a PDU session (or user plane connection) corresponding to the RSD in the matching URSP rule. That is, the service 1 is successfully bound to the PDU session, and step S740 is executed.

It should be noted that the PDU session may be a PDU session that has already been established or a PDU session to be established.

In the URSP evaluation process, if any of the following cases occurs, the binding of the service 1 to the PDU session fails. Accordingly, the terminal selects the PLMN 2 with a next-lower priority according to the first policy and re-executes steps S720 and S730, that is, performs URSP evaluation based on a URSP corresponding to the PLMN 2.

Case 1: The selected PLMN has no corresponding URSP.

Case 2: In the URSP evaluation process, none of the corresponding all URSP rules or non-match-all URSP rules can match the service 1.

Case 3: In the URSP evaluation process, data cannot be transmitted by using the PDU session corresponding to the RSD in the matching URSP rules, or a PDU session cannot be established based on the corresponding RSD in the matching URSP rule.

The following describes a method of using preemption priority in embodiments of this application with reference to FIG. 8. The method illustrated in FIG. 8 includes step S810 to step S840. It is assumed that a terminal does not support simultaneously transmitting data on a plurality of PLMNs or a plurality of RATs.

In step S810, a service 2 appears, and the terminal binds, based on a first policy and a URSP, the service 2 to a user plane connection corresponding to a PLMN 2 and E-UTRA, where the first policy is shown in Table 4.

In step S820, a service 1 appears, and the terminal needs to bind, based on the first policy and the URSP, the service 1 to a user plane connection corresponding to a PLMN 1 and an NR terrestrial radio access technology.

In step S830, since a preemption priority of the service 1 is higher than a preemption priority of the service 2, the terminal stops or releases the user plane connection associated with the service 2 (or all user plane connections associated with the service 2 for the PLMN 2 and E-UTRA), and starts establishing a user plane connection based on the PLMN 1 and NR associated with the service 1 to transmit data of the service 1.

It should be noted that since the user plane connection for the PLMN 2 and E-UTRA has been stopped or released, the terminal may determine a suitable user plane connection for the service 2 based on a URSP associated with the PLMN 1.

The above describes the methods for using the first policy and UE policy in embodiments of this application. The following describes transmission methods of the first policy and UE policy in embodiments of this application.

### Transmission method of first policy

In some implementations, the method further includes: transmitting, by a first core network device, configuration information to a terminal, where the configuration information is used to configure a first policy for the terminal.

In some implementations, the first core network device is an AMF. In some other implementations, the first core network device is a PCF. Accordingly, the configuration information may be transmitted by the PCF to the terminal via an AMF. For example, the first policy may be configured for the terminal by the PCF through a UCU procedure (for example, as shown in FIG. 2).

In some implementations, the method further includes: transmitting, by a second core network device, a registration response message to the terminal, where the registration response message carries the first policy. The second core network device may be an AMF.

### Transmission method of enhanced UE policy

In some implementations, for example, the enhanced UE policy includes a URSP, and the method further includes: transmitting, by a first core network device, configuration information to a terminal, where the configuration information is used to configure a URSP for the terminal.

In some implementations, the first core network device is an AMF. In some other implementations, the first core network device is a PCF. Accordingly, the configuration information may be transmitted by the PCF to the terminal via an AMF. For example, the first policy may be configured for the terminal by the PCF through a UCU procedure (for example, as shown in FIG. 2).

In some implementations, the method further includes: transmitting, by a second core network device, a registration response message to the terminal, where the registration response message carries a URSP. The second core network device may be an AMF.

With the development of communications systems, various types of communications devices have been introduced, and capabilities vary greatly for different communications devices. In this case, if at least one of a first policy or a UE policy is uniformly configured for the communications devices, an associated service may fail to be transmitted. For example, the terminal determines, based on the first policy and/or the UE policy, that an access manner associated with the first service is an access mode 1. However, a network device does not support a network accessed by the terminal in the access mode 1. In this case, the first service cannot be transmitted over the network based on the access mode 1.

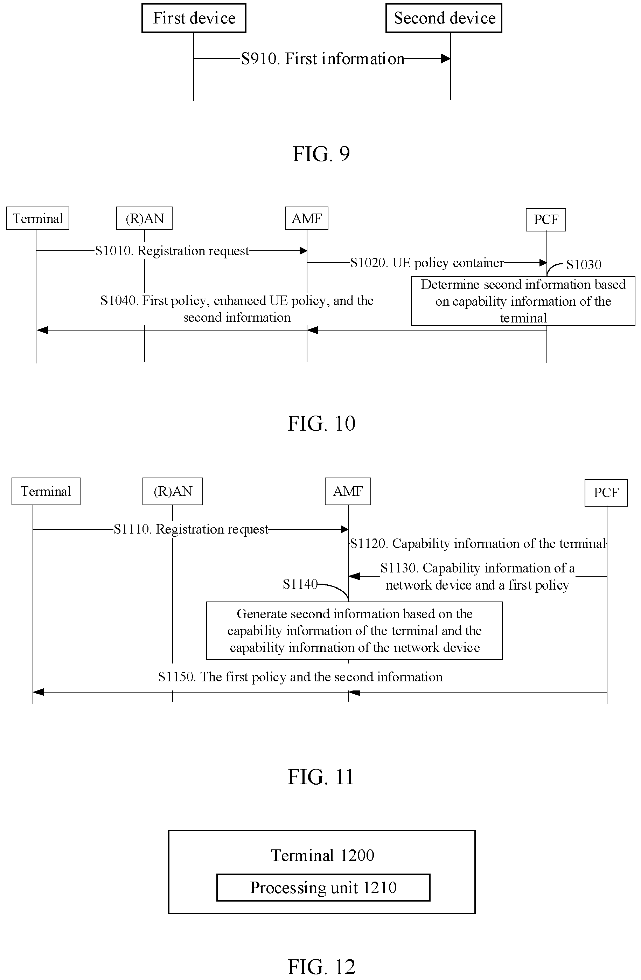

Therefore, in view of the foregoing problem, embodiments of this application provide a wireless communication method. In this method, first information may be transmitted between communications devices (also referred to as a "first device" and a "second device"), and the first information carries capability information associated with a network access mode, helping to improve a success rate of transmitting a first service. The following describes the wireless communication method according to an embodiment of this application with reference to FIG. 9.

In embodiments of this application, at least one of the first device or the second device is not limited. In some implementations, the first device may be a terminal, and the second device may be a network device. In some other implementations, the first device may be a network device, and the second device may be a terminal. Certainly, in embodiments of this application, both the first device and the second device may be terminals. It should be understood that the network device mentioned above may be a core network device, such as an AMF or a PCF.

In step S910, the first device transmits first information to the second device. The first information carries capability information associated with a network access mode. For example, the capability information carried in the first information can be capability information of the terminal. For another example, the capability information carried in the first information may be capability information of the network device.

In embodiments of this application, the network access mode is not limited. In some implementations, the network access mode may include a 3GPP access mode and/or a non-3GPP access mode. In some other implementations, the network access mode may include a plurality of radio access technologies in the 3GPP access mode. For example, the network access mode includes one or more of the following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

In some implementations, the capability information is used to indicate one or more of the following: whether network access performed based on a plurality of network access modes is supported; or whether access mode switching performed based on a plurality of network access modes is supported.

In an example in which the capability information is used to indicate whether network access performed based on the plurality of network access modes is supported, the capability information may be understood as indicating whether steering (steer) performed among the plurality of network access modes is supported. In other words, the capability information is used to indicate whether selecting a user plane connection of a network (including one or more of access network, RAT type, and system type) to transmit a service is supported.

In an example in which the capability information is used to indicate whether access mode switching performed based on the plurality of network access modes is supported, the capability information is also referred to as switching (switch) capability.

In some implementations, since different access modes may be associated with different networks, access mode switching performed based on the plurality of network access modes may also be accompanied by network switching. Therefore, the switching capability may be understood as indicating whether switching a specific service from one network to another is supported. Certainly, in embodiments of this application, different access modes may be associated with a same network. In this case, access mode switching performed based on the plurality of network access modes may not be accompanied by network switching.

In some implementations, a plurality of user plane connections may be established based on the plurality of access modes. Accordingly, the capability information is used to indicate one or more of the following: whether transmitting different data of a same service via the plurality of user plane connections is supported; whether non-simultaneous transmission performed via the plurality of user plane connections is supported; whether simultaneous transmission via the plurality of user plane connections is supported; whether transmission performed by using one USIM via the plurality of user plane connections is supported; whether transmission performed by using a plurality of USIMs via the plurality of user plane connections is supported; whether transmission performed by using one SUPI via the plurality of user plane connections is supported; whether transmission performed by using a plurality of SUPIs via the plurality of user plane connections is supported; or a type of a core network supported for use for the plurality of user plane connections.

For example, the capability information is used to indicate whether transmitting different data of a same service via the plurality of user plane connections is supported, and the capability information is also referred to as "split (split) capability". For example, the capability information is used to indicate a capability of splitting among multiple 3GPP access.

For example, the capability information is used to indicate whether non-simultaneous (non-simultaneous) transmission via the plurality of user plane connections is supported, or in other words, the capability information is used to indicate whether transmitting a service at different times via the plurality of user plane connections is supported. For example, the capability information is used to indicate whether transmitting a service at a time via only one user plane connection is supported.

For example, the capability information is used to indicate whether simultaneous (simultaneous) transmission via the plurality of user plane connections is supported, or in other words, the capability information is used to indicate whether transmitting a service at a same time via the plurality of user plane connections is supported. For example, the capability information is used to indicate whether transmitting a service at a time via the plurality of user plane connections is supported.

For example, the capability information is used to indicate whether transmission performed by using one USIM via the plurality of user plane connections is supported, or in other words, the capability information is used to indicate whether multi-user plane transmission performed by using one USIM is supported.

For example, the capability information is used to indicate whether transmission performed by using a plurality of USIMs via the plurality of user plane connections is supported, or in other words, the capability information is used to indicate whether multi-user plane transmission performed by using a plurality of USIMs is supported, where different USIMs among the plurality of USIMs may correspond to different user plane connections.

For example, the capability information is used to indicate whether transmission performed by using one SUPI via the plurality of user plane connections is supported, or in other words, the capability information is used to indicate whether multi-user plane transmission performed by using one SUPI is supported.

For example, the capability information is used to indicate whether transmission performed by using a plurality of SUPIs via the plurality of user plane connections is supported, or in other words, the capability information is used to indicate whether multi-user plane transmission performed by using a plurality of SUPIs is supported, where different SUPIs among the plurality of SUPIs may correspond to different user plane connections.

For example, the capability information is used to indicate the type of the core network supported for use for the plurality of user plane connections, or in other words, the capability information is used to indicate the type of core network that supports using the plurality of user plane connections. The type of the core network may include a 5GS and/or an EPS. Certainly, in embodiments of this application, the type of the core network may be replaced by a type of an NAS message, where the type of the NAS message may include an NAS message transmitted based on the 5GS and/or an NAS message transmitted based on the EPS.

In some implementations, the method further includes: receiving, by a first device, second information transmitted by a second device, where the second information includes one or more of the following: available capability information in the capability information carried in the first information; capability information, supported by the second device, in the capability information carried in the first information; capability information, allowed to be used by the second device, in the capability information carried in the first information; or a UE policy used by the first device.

For example, the second information includes the available capability information in the capability information carried in the first information, that is to say, the second device may indicate, through the second information, the available capability information in the capability information carried in the first information, and/or the second device may indicate, through the second information, unavailable capability information in the capability information carried in the first information.

For example, the second information includes capability information, supported by the second device, in the capability information carried in the first information, that is to say, the second device may indicate, through the second information, the capability information, supported by the second device, in the capability information carried in the first information, and/or the second device may indicate, through the second information, capability information that is not supported by the second device in the capability information carried in the first information.

For example, the second information includes capability information, allowed to be used by the second device, in the capability information carried in the first information, that is to say, the second device may indicate, through the second information, the capability information, allowed to be used by the second device, in the capability information carried in the first information, and/or the second device may indicate, through the second information, capability information that is not allowed to be used by the second device in the capability information carried in the first information.

For example, the second information includes the UE policy used by the first device, the UE policy used by the first device corresponds to the capability information of the first device. In other words, the UE policy used by the first device corresponds to the capability information carried in the first information, or the UE policy used by the first device is determined based on the capability information carried in the first information.

In embodiments of this application, the UE policy may be, for example, a URSP. Certainly, in embodiments of this application, the UE policy may alternatively be another policy introduced in a future communications system.

The above describes the capability information in embodiments of this application. The following describes a transmission scheme of capability information in embodiments of this application.

In some implementations, the second information is carried in one or more of the following: a registration response message; or configuration information, where the configuration information is used to configure the UE policy for the terminal.

In some implementations, the first information is carried in a registration request, where the registration request is used to request registration of the terminal.

In some implementations, the registration request carries a UE policy container, and the UE policy container includes the first information; or, the registration request carries a UE policy container and the first information.

In some implementations, the registration request is usually transmitted by a terminal device to a PCF via an AMF.

In some implementations, the second information may be determined by the PCF based on the first information. For example, since the AMF usually performs no processing on content in the UE policy container, if the first information is carried in the UE policy container, the AMF directly forwards the UE policy container to the PCF, and the PCF determines the second information based on the first information.

In some other implementations, the second information may be determined by the AMF based on the first information. For example, if the first information is capability information of the terminal and is carried in the registration request but outside the UE policy container, then the AMF may obtain the capability information of the terminal. After transmitting capability information of a network device, the PCF determines the second information based on the capability information of the terminal and the capability information of the network device. For the capability information of the network device, reference may be made to the foregoing description of the first information.

In embodiments of this application, a transmission scheme of the capability information may be used in combination with transmission manners of the first policy and the UE policy, to improve a success rate of service transmission. The following description is provided with reference to FIG. 10 and FIG. 11.

FIG. 10 is a schematic flowchart of a wireless communication method according to an embodiment of this application. The method illustrated in FIG. 10 includes step S1010 to step S1040.

In step S1010, a terminal transmits a registration request to an AMF. A UE policy container of the registration request includes capability information of the terminal (as an example of first information).

In step S1020, the AMF transmits the UE policy container to a PCF. The UE policy container includes the capability information of the terminal.

In step S1030, the PCF determines second information based on the capability information of the terminal.

In step S1040, the PCF transmits a first policy, an enhanced UE policy, and the second information to the terminal via the AMF.

In some implementations, the PCF may transmit the first policy, the enhanced UE policy, and the second information to the terminal by triggering a UCU procedure (for example, the method described earlier with reference to FIG. 2).

It should be noted that the PCF may further determine the second information by referring to subscription information (for example, subscription information from a UDM/UDR). The subscription information may include content identical or similar to the first information, helping a core network control plane network element determine reply content of the second information.

FIG. 11 is a schematic flowchart of a wireless communication method according to another embodiment of this application. The method illustrated in FIG. 11 includes step S1110 to step S1140.

In step S1110, a terminal transmits a registration request to an AMF. The registration request includes capability information of the terminal (as an example of first information). In some implementations, a first policy may be located outside a UE policy container.

In step S1120, the AMF transmits the capability information of the terminal to a PCF.

In step S1130, the PCF transmits capability information of a network device and the first policy to the AMF.

In step S1140, the AMF generates second information based on the capability information of the terminal and the capability information of the network device.

It should be noted that the AMF may further determine the second information by referring to subscription information (for example, subscription information from a UDM/UDR). The subscription information may include content identical or similar to the first information, helping a core network control plane network element determine reply content of the second information.

In step S1150, the AMF transmits the first policy and the second information to the terminal.

In some implementations, the PCF may transmit the first policy and the second information to the terminal by triggering a UCU procedure (for example, the method described earlier with reference to FIG. 2).

The method embodiments of this application are described above in detail with reference to FIG. 1 to FIG. 11. Apparatus embodiments of this application are described below in detail with reference to FIG. 12 to FIG. 18. It should be understood that the descriptions of the method embodiments correspond to descriptions of the apparatus embodiments, and therefore, for parts that are not described in detail, reference may be made to the foregoing method embodiments.

FIG. 12 is a schematic diagram of a terminal according to an embodiment of this application. The terminal 1200 shown in FIG. 12 includes a processing unit 1210.

The processing unit 1210 is configured to determine, based on a first policy, a first network associated with a first service, where the first policy includes a first association relationship between a service and a network.

The processing unit 1210 is configured to transmit the first service via the first network.

In some implementations, the first association relationship indicates that the first service is associated with a plurality of networks, the plurality of networks include the first network, and the plurality of networks correspond to different priorities.

In some implementations, the network includes a PLMN. In a case that the first association relationship indicates that the first service is associated with a plurality of networks, and the first network in the plurality of networks is a registered PLMN or an equivalent PLMN, then the first network is used to transmit the first service.

In some implementations, the plurality of networks include the first network and a second network, and a priority corresponding to the second network is higher than a priority corresponding to the first network.

In some implementations, the first association relationship indicates that a plurality of services are associated with the first network, and the plurality of services include the first service.

In some implementations, the terminal includes a plurality of USIMs. The processing unit 1210 is configured to transmit the first service through the first network by using a first USIM in the plurality of USIMs.

In some implementations, the first USIM is determined based on an association relationship between a USIM and a network.

In some implementations, the first policy includes a second association relationship between the service and a preemption priority, and the preemption priority indicates a priority for the service to occupy an associated network for transmission.

In some implementations, the second association relationship indicates that a preemption priority of a second service is higher than a preemption priority of the first service, and in a case that a first condition is satisfied, transmission of the second service preempts a resource for transmitting the first service, where the first condition includes one or more of the following: the terminal does not support simultaneously transmitting the first service on the first network and transmitting the second service on a second network; the terminal does not support simultaneously transmitting the first service and the second service through a plurality of radio access technologies RATs; in a process of the terminal performing simultaneous transmission through a plurality of networks, a quantity of the plurality of networks has reached an upper limit of a quantity of networks supported by the terminal for simultaneous transmission; or in a process of the terminal performing simultaneous transmission through a plurality of RATs, a quantity of the plurality of RATs has reached an upper limit of a quantity of RATs supported by the terminal for simultaneous transmission.

In some implementations, the processing unit 1210 is configured to determine, based on a UE policy, a radio access technology RAT type associated with the first network, where the UE policy includes an association relationship between the network and a RAT type; and/or determine, based on the UE policy, a system type associated with the first network, where the UE policy includes an association relationship between the network and a system type, and the system type indicates a type of a core network and/or a type of a non-access stratum NAS message in an associated network.

In some implementations, the first policy includes a third association relationship between the network and a RAT type.

In some implementations, the third association relationship indicates that the first network is associated with a plurality of RAT types, and the plurality of RAT types correspond to different priorities.

In some implementations, the processing unit 1210 is configured to determine a RAT type associated with the first network based on the third association relationship; and access the first network based on the RAT type associated with the first network to transmit the first service.

In some implementations, the terminal includes a plurality of USIMs. The processing unit 1210 is configured to select a first USIM from the plurality of USIMs based on a RAT type associated with the first network, where the first USIM performs registration and/or establishes a user plane connection by using the RAT type associated with the first network; and access the first network by using the first USIM to transmit the first service.

In some implementations, the RAT type includes one or more of the following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

In some implementations, the first policy includes a fourth association relationship between the network and a system type, and the system type indicates a type of a core network in the network and/or a type of a non-access stratum NAS message in the network.

In some implementations, the processing unit 1210 is configured to determine, based on the fourth association relationship, a system type associated with the first network.

In some implementations, the terminal further includes: a first receiving unit, configured to receive configuration information transmitted by a first core network device, where the configuration information is used to configure the first policy for the terminal.

In some implementations, the first core network device is an AMF; or the first core network device is a PCF, and the configuration information is transmitted by the PCF to the terminal through the AMF.

In some implementations, the terminal further includes: a second receiving unit, configured to receive a registration response message transmitted by a second core network device, where the registration response message carries the first policy.

In some implementations, in a case that a URSP corresponding to the first network matches the first service, the first service is transmitted through a first PDU session, and the first PDU session corresponds to an RSD in the URSP corresponding to the first network.

In some implementations, the first association relationship indicates that the first service is associated with the first network and a second network. The processing unit 1210 is configured to transmit the first service through the first network in a case that a second condition is satisfied, where the second condition includes one of the following: the first service does not match any URSP rule corresponding to the second network; or the first service fails to be transmitted through a PDU session corresponding to any RSD in a matching URSP rule corresponding to the second network.

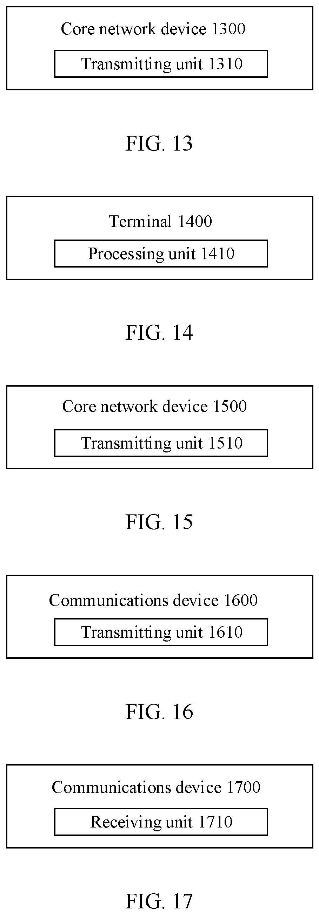

FIG. 13 is a schematic diagram of a core network device according to an embodiment of this application. The core network device 1300 shown in FIG. 13 includes a transmitting unit 1310.

The transmitting unit 1310 is configured to transmit a first policy to a terminal, where the first policy includes a first association relationship between a service and a network.

In some implementations, the first association relationship indicates that the first service is associated with a plurality of networks, the plurality of networks include the first network, and the plurality of networks correspond to different priorities.

In some implementations, the network includes a PLMN. In a case that the first association relationship indicates that the first service is associated with a plurality of networks, and the first network in the plurality of networks is a registered PLMN or an equivalent PLMN, then the first network is used to transmit the first service.

In some implementations, the plurality of networks include the first network and a second network, and a priority corresponding to the second network is higher than a priority corresponding to the first network.

In some implementations, the first association relationship indicates that a plurality of services are associated with the first network, and the plurality of services include the first service.

In some implementations, the first policy includes a second association relationship between the service and a preemption priority, and the preemption priority indicates a priority for the service to occupy an associated network for transmission.

In some implementations, the second association relationship indicates that a preemption priority of a second service is higher than a preemption priority of the first service, and in a case that a first condition is satisfied, transmission of the second service preempts a resource for transmitting the first service, where the first condition includes one or more of the following: the terminal does not support simultaneously transmitting the first service on the first network and transmitting the second service on a second network; the terminal does not support simultaneously transmitting the first service and the second service through a plurality of radio access technologies RATs; in a process of the terminal performing simultaneous transmission through a plurality of networks, a quantity of the plurality of networks has reached an upper limit of a quantity of networks supported by the terminal for simultaneous transmission; or in a process of the terminal performing simultaneous transmission through a plurality of RATs, a quantity of the plurality of RATs has reached an upper limit of a quantity of RATs supported by the terminal for simultaneous transmission.

In some implementations, the first policy includes a third association relationship between the network and a RAT type.

In some implementations, the third association relationship indicates that the first network is associated with a plurality of RAT types, and the plurality of RAT types correspond to different priorities.

In some implementations, the RAT type includes one or more of the following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

In some implementations, the first policy includes a fourth association relationship between the network and a system type, and the system type indicates a type of a core network in the network and/or a type of a non-access stratum NAS message in the network.

In some implementations, the first policy is carried in configuration information, and the configuration information is used to configure the first policy for the terminal.

In some implementations, the core network device is an AMF; or the core network device is a PCF, and the configuration information is transmitted by the PCF to the terminal through the AMF.

In some implementations, the first policy is carried in a registration response message.

In some implementations, in a case that a URSP corresponding to the first network matches the first service, the first service is transmitted through a first PDU session, and the first PDU session corresponds to an RSD in the URSP corresponding to the first network.

FIG. 14 is a schematic diagram of a terminal according to another embodiment of this application. The terminal 1400 shown in FIG. 14 includes a processing unit 1410.

The processing unit 1410 is configured to determine a UE route selection policy URSP corresponding to a first service, where the URSP is used to indicate one or more of the following: a third association relationship between a network and a radio access technology RAT type; or a fourth association relationship between the network and a system type, where the system type is used to indicate a type of a core network in the network and/or a type of a non-access network in the network.

In some implementations, at least one of the third association relationship or the fourth association relationship is carried in a route selection descriptor RSD in the URSP.

In some implementations, at least one of the third association relationship or the fourth association relationship is carried in access type preference information in the RSD.

In some implementations, at least one of the third association relationship or the fourth association relationship is dedicated information in the RSD.

In some implementations, the third association relationship indicates that the network is associated with a plurality of RAT types, and the plurality of RAT types correspond to different priorities.

In some implementations, the RAT type includes one or more of the following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

In some implementations, the URSP is carried in configuration information, and the configuration information is used to configure the URSP for the terminal.

In some implementations, the core network device is an AMF; or the core network device is a PCF, and the configuration information is transmitted by the PCF to the terminal through the AMF.

In some implementations, the URSP is carried in a registration response message.

FIG. 15 is a schematic diagram of a core network device according to another embodiment of this application. The core network device 1500 shown in FIG. 15 includes a transmitting unit 1510.

The transmitting unit 1510 is configured to transmit a UE route selection policy URSP to a terminal, where the URSP is used to indicate one or more of following: a third association relationship between a network and a radio access technology RAT type; or a fourth association relationship between the network and a system type, where the system type is used to indicate a type of a core network in the network and/or a type of a non-access network in the network.

In some implementations, at least one of the third association relationship or the fourth association relationship is carried in a route selection descriptor RSD in the URSP.

In some implementations, at least one of the third association relationship or the fourth association relationship is carried in access type preference information in the RSD.

In some implementations, at least one of the third association relationship or the fourth association relationship is dedicated information in the RSD.

In some implementations, the third association relationship indicates that the network is associated with a plurality of RAT types, and the plurality of RAT types correspond to different priorities.

In some implementations, the RAT type includes one or more of the following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

In some implementations, the URSP is carried in configuration information, and the configuration information is used to configure the URSP for the terminal.

In some implementations, the core network device is an AMF; or the core network device is a PCF, and the configuration information is transmitted by the PCF to the terminal through the AMF.

In some implementations, the URSP is carried in a registration response message.

FIG. 16 is a schematic diagram of a communications device according to an embodiment of this application. The communications device 1600 shown in FIG. 16 is a first device and the communications device 1600 includes a transmitting unit 1610.

The transmitting unit 1610 is configured to transmit first information to a second device, where the first information carries capability information associated with a network access mode.

In some implementations, the capability information is used to indicate one or more of the following: whether network access performed based on a plurality of network access modes is supported; or whether access mode switching performed based on a plurality of network access modes is supported.

In some implementations, a plurality of user plane connections are established based on the plurality of access modes, and the capability information is used to indicate one or more of the following: whether transmitting different data of a same service via the plurality of user plane connections is supported; whether non-simultaneous transmission performed via the plurality of user plane connections is supported; whether simultaneous transmission via the plurality of user plane connections is supported; whether transmission performed by using one USIM via the plurality of user plane connections is supported; whether transmission performed by using a plurality of USIMs via the plurality of user plane connections is supported; whether transmission performed by using one SUPI via the plurality of user plane connections is supported; whether transmission performed by using a plurality of SUPIs via the plurality of user plane connections is supported; or a type of a core network supported for use for the plurality of user plane connections.

In some implementations, the device further includes: a receiving unit, configured to receive second information transmitted by the second device. The second information includes one or more of the following: available capability information in the capability information carried in the first information; capability information, supported by the second device, in the capability information carried in the first information; capability information, allowed to be used by the second device, in the capability information carried in the first information; or a UE policy used by the first device.

In some implementations, the first device is a terminal, and the second device is a core network device.

In some implementations, the second information is carried in one or more of the following: a registration response message; or configuration information, where the configuration information is used to configure a UE policy for the terminal.

In some implementations, the first information is carried in a registration request, and the registration request is used to request registration of the terminal.

In some implementations, the registration request carries a UE policy container, and the UE policy container includes the first information; or, the registration request carries a UE policy container and the first information.

In some implementations, the first device is a terminal device, and the second device is an AMF or a PCF.

FIG. 17 is a schematic diagram of a communications device according to another embodiment of this application. The communications device 1700 shown in FIG. 17 is a second device and the communications device 1700 includes a receiving unit 1710.

The receiving unit 1710 is configured to receive first information transmitted by a first device, where the first information carries capability information associated with a network access mode.

In some implementations, the capability information is used to indicate one or more of the following: whether network access performed based on a plurality of network access modes is supported; or whether access mode switching performed based on a plurality of network access modes is supported.

In some implementations, a plurality of user plane connections are established based on the plurality of access modes, and the capability information is used to indicate one or more of the following: whether transmitting different data of a same service via the plurality of user plane connections is supported; whether non-simultaneous transmission performed via the plurality of user plane connections is supported; whether simultaneous transmission via the plurality of user plane connections is supported; whether transmission performed by using one USIM via the plurality of user plane connections is supported; whether transmission performed by using a plurality of USIMs via the plurality of user plane connections is supported; whether transmission performed by using one SUPI via the plurality of user plane connections is supported; whether transmission performed by using a plurality of SUPIs via the plurality of user plane connections is supported; or a type of a core network supported for use for the plurality of user plane connections.

In some implementations, the device further includes: a transmitting unit, configured to transmit second information to the first device. The second information includes one or more of the following: available capability information in the capability information carried in the first information; capability information, supported by the second device, in the capability information carried in the first information; capability information, allowed to be used by the second device, in the capability information carried in the first information; or a UE policy used by the first device.

In some implementations, the first device is a terminal, and the second device is a core network device.

In some implementations, the second information is carried in one or more of the following: a registration response message; or configuration information, where the configuration information is used to configure a UE policy for the terminal.

In some implementations, the first information is carried in a registration request, and the registration request is used to request registration of the terminal.

In some implementations, the registration request carries a UE policy container, and the UE policy container includes the first information; or, the registration request carries a UE policy container and the first information.

In some implementations, the first device is a terminal device, and the second device is an AMF or a PCF.

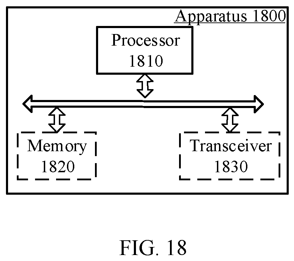

FIG. 18 is a schematic diagram of a structure of a communications apparatus according to an embodiment of this application. Dashed lines in FIG. 18 indicate that a unit or module is optional. The apparatus 1800 may be configured to implement the methods described in the foregoing method embodiments. The apparatus 1800 may be a chip, a terminal, or a network device.

The apparatus 1800 may include one or more processors 1810. The processor 1810 may support the apparatus 1800 in implementing the methods described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program, where the program may be executed by the processor 1810, to cause the processor 1810 to execute the methods described in the method embodiments. The memory 1820 may be separated from or integrated into the processor 1810.

The apparatus 1800 may further include a transceiver 1830. The processor 1810 may communicate with another device or chip by using the transceiver 1830. For example, the processor 1810 may transmit data to and receive data from another device or chip through the transceiver 1830.

An embodiment of this application further provides a computer-readable storage medium for storing a program. The computer-readable storage medium may be applied to a terminal or a network device provided in embodiments of this application, and the program causes a computer to execute the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes the computer to execute the methods performed by the terminal or the network device in embodiments of this application.

It should be understood that the terms "service" and "application" in this application may be used interchangeably. In addition, the term "terminal" used in this application may include one USIM card or may include a plurality of USIM cards. Certainly, in this application, a terminal may include one UE function or may include a plurality of UE functions for accessing different networks respectively.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefining" or "pre-configuring" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
determining, by a terminal based on a first policy, a first network associated with a first service, wherein the first policy comprises a first association relationship between a service and a network; and
transmitting, by the terminal, the first service through the first network.

2. The method according to claim 1, wherein the first association relationship indicates that the first service is associated with a plurality of networks, the plurality of networks comprise the first network, and the plurality of networks correspond to different priorities.

3. The method according to claim 1 or 2, wherein the network comprises a public land mobile network PLMN, and in a case that the first association relationship indicates that the first service is associated with a plurality of networks, and the first network in the plurality of networks is a registered PLMN or an equivalent PLMN, then the first network is used to transmit the first service.

4. The method according to claim 3, wherein the plurality of networks comprise the first network and a second network, and a priority corresponding to the second network is higher than a priority corresponding to the first network.

5. The method according to any one of claims 1 to 4, wherein the first association relationship indicates that a plurality of services are associated with the first network, and the plurality of services comprise the first service.

6. The method according to any one of claims 1 to 5, wherein the terminal comprises a plurality of universal subscriber identity modules USIMs, and the transmitting, by the terminal, the first service through the first network comprises:
transmitting, by the terminal, the first service through the first network by using a first USIM in the plurality of USIMs.

7. The method according to claim 6, wherein the first USIM is determined based on an association relationship between a USIM and a network.

8. The method according to any one of claims 1 to 7, wherein the first policy comprises a second association relationship between the service and a preemption priority, and the preemption priority indicates a priority for the service to occupy an associated network for transmission.

9. The method according to claim 8, wherein the second association relationship indicates that a preemption priority of a second service is higher than a preemption priority of the first service, and in a case that a first condition is satisfied, transmission of the second service preempts a resource for transmitting the first service, wherein the first condition comprises one or more of following:
the terminal does not support simultaneously transmitting the first service on the first network and transmitting the second service on a second network;
the terminal does not support simultaneously transmitting the first service and the second service through a plurality of radio access technologies RATs;
in a process of the terminal performing simultaneous transmission through a plurality of networks, a quantity of the plurality of networks has reached an upper limit of a quantity of networks supported by the terminal for simultaneous transmission; or
in a process of the terminal performing simultaneous transmission through a plurality of RATs, a quantity of the plurality of RATs has reached an upper limit of a quantity of RATs supported by the terminal for simultaneous transmission.

10. The method according to any one of claims 1 to 9, wherein the method comprises:
determining, by the terminal based on a UE policy, a radio access technology RAT type associated with the first network, wherein the UE policy comprises an association relationship between the network and a RAT type; and/or
determining, by the terminal based on the UE policy, a system type associated with the first network, wherein the UE policy comprises an association relationship between the network and a system type, and the system type indicates a type of a core network and/or a type of a non-access stratum NAS message in an associated network.

11. The method according to any one of claims 1 to 9, wherein the first policy comprises a third association relationship between the network and a RAT type.

12. The method according to claim 11, wherein the third association relationship indicates that the first network is associated with a plurality of RAT types, and the plurality of RAT types correspond to different priorities.

13. The method according to claim 11 or 12, wherein the method further comprises:
determining, by the terminal based on the third association relationship, a RAT type associated with the first network; and
the transmitting, by the terminal, the first service through the first network comprises:
accessing, by the terminal, the first network based on the RAT type associated with the first network to transmit the first service.

14. The method according to any one of claims 9 to 13, wherein the terminal comprises a plurality of USIMs, and the transmitting, by the terminal, the first service through the first network comprises:
selecting, by the terminal, a first USIM from the plurality of USIMs based on a RAT type associated with the first network, wherein the first USIM performs registration and/or establishes a user plane connection by using the RAT type associated with the first network; and
accessing, by the terminal, the first network by using the first USIM to transmit the first service.

15. The method according to any one of claims 10 to 14, wherein the RAT type comprises one or more of following: an NR terrestrial network radio access technology, evolved universal mobile telecommunications system UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

16. The method according to any one of claims 1 to 15, wherein the first policy comprises a fourth association relationship between the network and a system type, and the system type indicates a type of a core network in the network and/or a type of a non-access stratum NAS message in the network.

17. The method according to claim 16, wherein before the transmitting, by the terminal, the first service through the first network, the method further comprises:
determining, by the terminal based on the fourth association relationship, a system type associated with the first network.

18. The method according to any one of claims 1 to 17, wherein the method further comprises:
receiving, by the terminal, configuration information transmitted by a first core network device, wherein the configuration information is used to configure the first policy for the terminal.

19. The method according to claim 18, wherein the first core network device is an access and mobility management function AMF; or
in a case that the first core network device is a policy control function PCF, the configuration information is transmitted by the PCF to the terminal through the AMF.

20. The method according to any one of claims 1 to 17, wherein the method further comprises:
receiving, by the terminal, a registration response message transmitted by a second core network device, wherein the registration response message carries the first policy.

21. The method according to any one of claims 1 to 20, wherein in a case that a UE route selection policy URSP corresponding to the first network matches the first service, the first service is transmitted through a first protocol data unit PDU session, and the first PDU session corresponds to a route selection descriptor RSD in the URSP corresponding to the first network.

22. The method according to any one of claims 1 to 21, wherein the first association relationship indicates that the first service is associated with the first network and a second network, and the transmitting, by the terminal, the first service through the first network comprises:
transmitting, by the terminal, the first service through the first network in a case that a second condition is satisfied, wherein the second condition comprises one of following:
the first service does not match any URSP rule corresponding to the second network; or
the first service fails to be transmitted through a PDU session corresponding to any RSD in a matching URSP rule corresponding to the second network.

23. A wireless communication method, comprising:
transmitting, by a core network device, a first policy to a terminal, wherein the first policy comprises a first association relationship between a service and a network.

24. The method according to claim 23, wherein the first association relationship indicates that the first service is associated with a plurality of networks, the plurality of networks comprise the first network, and the plurality of networks correspond to different priorities.

25. The method according to claim 23 or 24, wherein the network comprises a PLMN, and in a case that the first association relationship indicates that the first service is associated with a plurality of networks, and the first network in the plurality of networks is a registered PLMN or an equivalent PLMN, then the first network is used to transmit the first service.

26. The method according to claim 25, wherein the plurality of networks comprise the first network and a second network, and a priority corresponding to the second network is higher than a priority corresponding to the first network.

27. The method according to any one of claims 23 to 26, wherein the first association relationship indicates that a plurality of services are associated with the first network, and the plurality of services comprise the first service.

28. The method according to any one of claims 23 to 26, wherein the first policy comprises a second association relationship between the service and a preemption priority, and the preemption priority indicates a priority for the service to occupy an associated network for transmission.

29. The method according to claim 28, wherein the second association relationship indicates that a preemption priority of a second service is higher than a preemption priority of the first service, and in a case that a first condition is satisfied, transmission of the second service preempts a resource for transmitting the first service, wherein the first condition comprises one or more of following:
the terminal does not support simultaneously transmitting the first service on the first network and transmitting the second service on a second network;
the terminal does not support simultaneously transmitting the first service and the second service through a plurality of radio access technologies RATs;
in a process of the terminal performing simultaneous transmission through a plurality of networks, a quantity of the plurality of networks has reached an upper limit of a quantity of networks supported by the terminal for simultaneous transmission; or
in a process of the terminal performing simultaneous transmission through a plurality of RATs, a quantity of the plurality of RATs has reached an upper limit of a quantity of RATs supported by the terminal for simultaneous transmission.

30. The method according to any one of claims 23 to 29, wherein the first policy comprises a third association relationship between the network and a RAT type.

31. The method according to claim 30, wherein the third association relationship indicates that the first network is associated with a plurality of RAT types, and the plurality of RAT types correspond to different priorities.

32. The method according to claim 30 or 31, wherein the RAT type comprises one or more of following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

33. The method according to any one of claims 23 to 32, wherein the first policy comprises a fourth association relationship between the network and a system type, and the system type indicates a type of a core network in the network and/or a type of a non-access stratum NAS message in the network.

34. The method according to any one of claims 23 to 33, wherein the first policy is carried in configuration information, and the configuration information is used to configure the first policy for the terminal.

35. The method according to claim 34, wherein the core network device is an AMF; or
in a case that the core network device is a PCF, the configuration information is transmitted by the PCF to the terminal through the AMF.

36. The method according to any one of claims 23 to 33, wherein the first policy is carried in a registration response message.

37. The method according to any one of claims 23 to 36, wherein in a case that a URSP corresponding to the first network matches the first service, the first service is transmitted through a first PDU session, and the first PDU session corresponds to an RSD in the URSP corresponding to the first network.

38. A wireless communication method, comprising:
determining, by a terminal, a UE route selection policy URSP corresponding to a first service, wherein the URSP is used to indicate one or more of following:
a third association relationship between a network and a radio access technology RAT type; or
a fourth association relationship between the network and a system type, wherein the system type is used to indicate a type of a core network in the network and/or a type of a non-access network in the network.

39. The method according to claim 38, wherein at least one of the third association relationship or the fourth association relationship is carried in a route selection descriptor RSD in the URSP.

40. The method according to claim 39, wherein at least one of the third association relationship or the fourth association relationship is carried in access type preference information in the RSD.

41. The method according to claim 39, wherein at least one of the third association relationship or the fourth association relationship is dedicated information in the RSD.

42. The method according to any one of claims 38 to 41, wherein the third association relationship indicates that the network is associated with a plurality of RAT types, and the plurality of RAT types correspond to different priorities.

43. The method according to any one of claims 38 to 42, wherein the RAT type comprises one or more of following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

44. The method according to any one of claims 38 to 43, wherein the URSP is carried in configuration information, and the configuration information is used to configure the URSP for the terminal.

45. The method according to claim 44, wherein the core network device is an AMF; or
in a case that the core network device is a PCF, the configuration information is transmitted by the PCF to the terminal through the AMF.

46. The method according to any one of claims 38 to 43, wherein the URSP is carried in a registration response message.

47. A wireless communication method, comprising:
transmitting, by a core network device, a UE route selection policy URSP to a terminal, wherein the URSP is used to indicate one or more of following:
a third association relationship between a network and a radio access technology RAT type; or
a fourth association relationship between the network and a system type, wherein the system type is used to indicate a type of a core network in the network and/or a type of a non-access network in the network.

48. The method according to claim 47, wherein at least one of the third association relationship or the fourth association relationship is carried in a route selection descriptor RSD in the URSP.

49. The method according to claim 48, wherein at least one of the third association relationship or the fourth association relationship is carried in access type preference information in the RSD.

50. The method according to claim 48, wherein at least one of the third association relationship or the fourth association relationship is dedicated information in the RSD.

51. The method according to any one of claims 47 to 50, wherein the third association relationship indicates that the network is associated with a plurality of RAT types, and the plurality of RAT types correspond to different priorities.

52. The method according to any one of claims 47 to 51, wherein the RAT type comprises one or more of following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

53. The method according to any one of claims 47 to 52, wherein the URSP is carried in configuration information, and the configuration information is used to configure the URSP for the terminal.

54. The method according to claim 53, wherein the core network device is an AMF; or
in a case that the core network device is a PCF, the configuration information is transmitted by the PCF to the terminal through the AMF.

55. The method according to any one of claims 47 to 54, wherein the URSP is carried in a registration response message.

56. A wireless communication method, comprising:
transmitting, by a first device, first information to a second device, wherein the first information carries capability information associated with a network access mode.

57. The method according to claim 56, wherein the capability information is used to indicate one or more of following:
whether network access performed based on a plurality of network access modes is supported; or
whether access mode switching performed based on a plurality of network access modes is supported.

58. The method according to claim 56 or 57, wherein a plurality of user plane connections are established based on the plurality of access modes, and the capability information is used to indicate one or more of following:
whether transmitting different data of a same service via the plurality of user plane connections is supported;
whether non-simultaneous transmission performed via the plurality of user plane connections is supported;
whether simultaneous transmission performed via the plurality of user plane connections is supported;
whether transmission performed by using one USIM via the plurality of user plane connections is supported;
whether transmission performed by using a plurality of USIMs via the plurality of user plane connections is supported;
whether transmission performed by using one SUPI via the plurality of user plane connections is supported;
whether transmission performed by using a plurality of SUPIs via the plurality of user plane connections is supported; or
a type of a core network supported for use for the plurality of user plane connections.

59. The method according to any one of claims 56 to 58, wherein the method further comprises:
receiving, by the first device, second information transmitted by the second device, wherein the second information comprises one or more of following:
available capability information in the capability information carried in the first information;
capability information, supported by the second device, in the capability information carried in the first information;
capability information, allowed to be used by the second device, in the capability information carried in the first information; or
a UE policy used by the first device.

60. The method according to any one of claims 56 to 59, wherein the first device is a terminal, and the second device is a core network device.

61. The method according to claim 60, wherein second information is carried in one or more of following:
a registration response message; or
configuration information, wherein the configuration information is used to configure a UE policy for the terminal.

62. The method according to any one of claims 56 to 61, wherein the first information is carried in a registration request, and the registration request is used to request registration of the terminal.

63. The method according to claim 62, wherein the registration request carries a UE policy container, and the UE policy container comprises the first information; or,
the registration request carries a UE policy container and the first information.

64. The method according to claim 62 or 63, wherein the first device is a terminal device, and the second device is an AMF or a PCF.

65. A wireless communication method, comprising:
receiving, by a second device, first information transmitted by a first device, wherein the first information carries capability information associated with a network access mode.

66. The method according to claim 65, wherein the capability information is used to indicate one or more of following:
whether network access performed based on a plurality of network access modes is supported; or
whether access mode switching performed based on a plurality of network access modes is supported.

67. The method according to claim 65 or 66, wherein a plurality of user plane connections are established based on the plurality of access modes, and the capability information is used to indicate one or more of following:
whether transmitting different data of a same service via the plurality of user plane connections is supported;
whether non-simultaneous transmission performed via the plurality of user plane connections is supported;
whether simultaneous transmission performed via the plurality of user plane connections is supported;
whether transmission performed by using one USIM via the plurality of user plane connections is supported;
whether transmission performed by using a plurality of USIMs via the plurality of user plane connections is supported;
whether transmission performed by using one SUPI via the plurality of user plane connections is supported;
whether transmission performed by using a plurality of SUPIs via the plurality of user plane connections is supported; or
a type of a core network supported for use for the plurality of user plane connections.

68. The method according to any one of claims 65 to 67, wherein the method further comprises:
transmitting, by the second device, second information to the first device, wherein the second information comprises one or more of following:
available capability information in the capability information carried in the first information;
capability information, supported by the second device, in the capability information carried in the first information;
capability information, allowed to be used by the second device, in the capability information carried in the first information; or
a UE policy used by the first device.

69. The method according to any one of claims 65 to 68, wherein the first device is a terminal, and the second device is a core network device.

70. The method according to claim 69, wherein second information is carried in one or more of following:
a registration response message; or
configuration information, wherein the configuration information is used to configure a UE policy for the terminal.

71. The method according to any one of claims 65 to 70, wherein the first information is carried in a registration request, and the registration request is used to request registration of the terminal.

72. The method according to claim 71, wherein the registration request carries a UE policy container, and the UE policy container comprises the first information; or,
the registration request carries a UE policy container and the first information.

73. The method according to claim 71 or 72, wherein the first device is a terminal device, and the second device is an AMF or a PCF.

74. A terminal, comprising:
a processing unit, configured to determine, based on a first policy, a first network associated with a first service, wherein the first policy comprises a first association relationship between a service and a network; and
a transmitting unit, configured to transmit the first service via the first network.

75. The terminal according to claim 74, wherein the first association relationship indicates that the first service is associated with a plurality of networks, the plurality of networks comprise the first network, and the plurality of networks correspond to different priorities.

76. The terminal according to claim 74 or 75, wherein the network comprises a public land mobile network PLMN, and in a case that the first association relationship indicates that the first service is associated with a plurality of networks, and the first network in the plurality of networks is a registered PLMN or an equivalent PLMN, then the first network is used to transmit the first service.

77. The terminal according to claim 76, wherein the plurality of networks comprise the first network and a second network, and a priority corresponding to the second network is higher than a priority corresponding to the first network.

78. The terminal according to any one of claims 74 to 77, wherein the first association relationship indicates that a plurality of services are associated with the first network, and the plurality of services comprise the first service.

79. The terminal according to any one of claims 74 to 78, wherein the terminal comprises a plurality of universal subscriber identity modules USIMs, and the transmitting unit is configured to transmit the first service through the first network by using a first USIM in the plurality of USIMs.

80. The terminal according to claim 79, wherein the first USIM is determined based on an association relationship between a USIM and a network.

81. The terminal according to any one of claims 74 to 80, wherein the first policy comprises a second association relationship between the service and a preemption priority, and the preemption priority indicates a priority for the service to occupy an associated network for transmission.

82. The terminal according to claim 81, wherein the second association relationship indicates that a preemption priority of a second service is higher than a preemption priority of the first service, and in a case that a first condition is satisfied, transmission of the second service preempts a resource for transmitting the first service, wherein the first condition comprises one or more of following:
the terminal does not support simultaneously transmitting the first service on the first network and transmitting the second service on a second network;
the terminal does not support simultaneously transmitting the first service and the second service through a plurality of radio access technologies RATs;
in a process of the terminal performing simultaneous transmission through a plurality of networks, a quantity of the plurality of networks has reached an upper limit of a quantity of networks supported by the terminal for simultaneous transmission; or
in a process of the terminal performing simultaneous transmission through a plurality of RATs, a quantity of the plurality of RATs has reached an upper limit of a quantity of RATs supported by the terminal for simultaneous transmission.

83. The terminal according to any one of claims 74 to 82, wherein the processing unit is configured to:
determine, based on a UE policy, a radio access technology RAT type associated with the first network, wherein the UE policy comprises an association relationship between the network and a RAT type; and/or
determine, based on the UE policy, a system type associated with the first network, wherein the UE policy comprises an association relationship between the network and a system type, and the system type indicates a type of a core network and/or a type of a non-access stratum NAS message in an associated network.

84. The terminal according to any one of claims 74 to 82, wherein the first policy comprises a third association relationship between the network and a RAT type.

85. The terminal according to claim 84, wherein the third association relationship indicates that the first network is associated with a plurality of RAT types, and the plurality of RAT types correspond to different priorities.

86. The terminal according to claim 84 or 85, wherein the processing unit is configured to determine, based on the third association relationship, a RAT type associated with the first network; and
the transmitting unit is configured to access the first network based on the RAT type associated with the first network to transmit the first service.

87. The terminal according to any one of claims 82 to 86, wherein the terminal comprises a plurality of USIMs, and the transmitting unit is configured to:
select a first USIM from the plurality of USIMs based on a RAT type associated with the first network, wherein the first USIM performs registration and/or establishes a user plane connection by using the RAT type associated with the first network; and
access the first network by using the first USIM to transmit the first service.

88. The terminal according to any one of claims 83 to 87, wherein the RAT type comprises one or more of following: an NR terrestrial network radio access technology, evolved universal mobile telecommunications system UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

89. The terminal according to any one of claims 74 to 88, wherein the first policy comprises a fourth association relationship between the network and a system type, and the system type indicates a type of a core network in the network and/or a type of a non-access stratum NAS message in the network.

90. The terminal according to claim 89, wherein before the terminal transmits the first service via the first network, the transmitting unit is configured to determine, based on the fourth association relationship, a system type associated with the first network.

91. The terminal according to any one of claims 74 to 90, wherein the terminal further comprises:
a first receiving unit, configured to receive configuration information transmitted by a first core network device, wherein the configuration information is used to configure the first policy for the terminal.

92. The terminal according to claim 91, wherein the first core network device is an access and mobility management function AMF; or
in a case that the first core network device is a policy control function PCF, the configuration information is transmitted by the PCF to the terminal through the AMF.

93. The terminal according to any one of claims 74 to 90, wherein the terminal further comprises:
a second receiving unit, configured to receive a registration response message transmitted by a second core network device, wherein the registration response message carries the first policy.

94. The terminal according to any one of claims 74 to 93, wherein in a case that a UE route selection policy URSP corresponding to the first network matches the first service, the first service is transmitted through a first protocol data unit PDU session, and the first PDU session corresponds to a route selection descriptor RSD in the URSP corresponding to the first network.

95. The terminal according to any one of claims 74 to 94, wherein the first association relationship indicates that the first service is associated with the first network and a second network, and the transmitting unit is configured to:
transmit, by the terminal, the first service through the first network in a case that a second condition is satisfied, wherein the second condition comprises one of following:
the first service does not match any URSP rule corresponding to the second network; or
the first service fails to be transmitted through a PDU session corresponding to any RSD in a matching URSP rule corresponding to the second network.

96. A core network device, comprising:
a transmitting unit, configured to transmit a first policy to a terminal, wherein the first policy comprises a first association relationship between a service and a network.

97. The core network device according to claim 96, wherein the first association relationship indicates that the first service is associated with a plurality of networks, the plurality of networks comprise the first network, and the plurality of networks correspond to different priorities.

98. The core network device according to claim 96 or 97, wherein the network comprises a PLMN, and in a case that the first association relationship indicates that the first service is associated with a plurality of networks, and the first network in the plurality of networks is a registered PLMN or an equivalent PLMN, then the first network is used to transmit the first service.

99. The core network device according to claim 98, wherein the plurality of networks comprise the first network and a second network, and a priority corresponding to the second network is higher than a priority corresponding to the first network.

100. The core network device according to any one of claims 96 to 99, wherein the first association relationship indicates that a plurality of services are associated with the first network, and the plurality of services comprise the first service.

101. The core network device according to any one of claims 96 to 99, wherein the first policy comprises a second association relationship between the service and a preemption priority, and the preemption priority indicates a priority for the service to occupy an associated network for transmission.

102. The core network device according to claim 101, wherein the second association relationship indicates that a preemption priority of a second service is higher than a preemption priority of the first service, and in a case that a first condition is satisfied, transmission of the second service preempts a resource for transmitting the first service, wherein the first condition comprises one or more of following:
the terminal does not support simultaneously transmitting the first service on the first network and transmitting the second service on a second network;
the terminal does not support simultaneously transmitting the first service and the second service through a plurality of radio access technologies RATs;
in a process of the terminal performing simultaneous transmission through a plurality of networks, a quantity of the plurality of networks has reached an upper limit of a quantity of networks supported by the terminal for simultaneous transmission; or
in a process of the terminal performing simultaneous transmission through a plurality of RATs, a quantity of the plurality of RATs has reached an upper limit of a quantity of RATs supported by the terminal for simultaneous transmission.

103. The core network device according to any one of claims 96 to 102, wherein the first policy comprises a third association relationship between the network and a RAT type.

104. The core network device according to claim 103, wherein the third association relationship indicates that the first network is associated with a plurality of RAT types, and the plurality of RAT types correspond to different priorities.

105. The core network device according to claim 103 or 104, wherein the RAT type comprises one or more of following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

106. The core network device according to any one of claims 96 to 105, wherein the first policy comprises a fourth association relationship between the network and a system type, and the system type indicates a type of a core network in the network and/or a type of a non-access stratum NAS message in the network.

107. The core network device according to any one of claims 96 to 106, wherein the first policy is carried in configuration information, and the configuration information is used to configure the first policy for the terminal.

108. The core network device according to claim 107, wherein the core network device is an AMF; or
in a case that the core network device is a PCF, the configuration information is transmitted by the PCF to the terminal through the AMF.

109. The core network device according to any one of claims 96 to 106, wherein the first policy is carried in a registration response message.

110. The core network device according to any one of claims 96 to 109, wherein in a case that a URSP corresponding to the first network matches the first service, the first service is transmitted through a first PDU session, and the first PDU session corresponds to an RSD in the URSP corresponding to the first network.

111. A terminal, comprising:
a processing unit, configured to determine a UE route selection policy URSP corresponding to a first service, wherein the URSP is used to indicate one or more of following:
a third association relationship between a network and a radio access technology RAT type; or
a fourth association relationship between the network and a system type, wherein the system type is used to indicate a type of a core network in the network and/or a type of a non-access network in the network.

112. The terminal according to claim 111, wherein at least one of the third association relationship or the fourth association relationship is carried in a route selection descriptor RSD in the URSP.

113. The terminal according to claim 112, wherein at least one of the third association relationship or the fourth association relationship is carried in access type preference information in the RSD.

114. The terminal according to claim 112, wherein at least one of the third association relationship or the fourth association relationship is dedicated information in the RSD.

115. The terminal according to any one of claims 111 to 114, wherein the third association relationship indicates that the network is associated with a plurality of RAT types, and the plurality of RAT types correspond to different priorities.

116. The terminal according to any one of claims 111 to 115, wherein the RAT type comprises one or more of following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

117. The terminal according to any one of claims 111 to 116, wherein the URSP is carried in configuration information, and the configuration information is used to configure the URSP for the terminal.

118. The terminal according to claim 117, wherein the core network device is an AMF; or in a case that the core network device is a PCF, the configuration information is transmitted by the PCF to the terminal through the AMF.

119. The terminal according to any one of claims 111 to 116, wherein the URSP is carried in a registration response message.

120. A core network device, comprising:
a transmitting unit, configured to transmit a UE route selection policy URSP to a terminal, wherein the URSP is used to indicate one or more of following:
a third association relationship between a network and a radio access technology RAT type; or
a fourth association relationship between the network and a system type, wherein the system type is used to indicate a type of a core network in the network and/or a type of a non-access network in the network.

121. The core network device according to claim 120, wherein at least one of the third association relationship or the fourth association relationship is carried in a route selection descriptor RSD in the URSP.

122. The core network device according to claim 121, wherein at least one of the third association relationship or the fourth association relationship is carried in access type preference information in the RSD.

123. The core network device according to claim 121, wherein at least one of the third association relationship or the fourth association relationship is dedicated information in the RSD.

124. The core network device according to any one of claims 120 to 123, wherein the third association relationship indicates that the network is associated with a plurality of RAT types, and the plurality of RAT types correspond to different priorities.

125. The core network device according to any one of claims 120 to 124, wherein the RAT type comprises one or more of following: an NR terrestrial network radio access technology, evolved UMTS terrestrial radio access E-UTRA, an NR satellite access technology, an NR geostationary earth orbit GEO radio access technology, an NR medium earth orbit MEO satellite radio access technology, or an NR low earth orbit LEO satellite.

126. The core network device according to any one of claims 120 to 125, wherein the URSP is carried in configuration information, and the configuration information is used to configure the URSP for the terminal.

127. The core network device according to claim 126, wherein the core network device is an AMF; or
in a case that the core network device is a PCF, the configuration information is transmitted by the PCF to the terminal through the AMF.

128. The core network device according to any one of claims 120 to 125, wherein the URSP is carried in a registration response message.

129. A communications device, wherein the communications device is a first device and comprises:
a transmitting unit, configured to transmit first information to a second device, wherein the first information carries capability information associated with a network access mode.

130. The communications device according to claim 129, wherein the capability information is used to indicate one or more of following:
whether network access performed based on a plurality of network access modes is supported; or
whether access mode switching performed based on a plurality of network access modes is supported.

131. The communications device according to claim 129 or 130, wherein a plurality of user plane connections are established based on the plurality of access modes, and the capability information is used to indicate one or more of following:
whether transmitting different data of a same service via the plurality of user plane connections is supported;
whether non-simultaneous transmission performed via the plurality of user plane connections is supported;
whether simultaneous transmission performed via the plurality of user plane connections is supported;
whether transmission performed by using one USIM via the plurality of user plane connections is supported;
whether transmission performed by using a plurality of USIMs via the plurality of user plane connections is supported;
whether transmission performed by using one SUPI via the plurality of user plane connections is supported;
whether transmission performed by using a plurality of SUPIs via the plurality of user plane connections is supported; or
a type of a core network supported for use for the plurality of user plane connections.

132. The communications device according to any one of claims 129 to 131, wherein the communications device further comprises:
a receiving unit, configured to receive second information transmitted by the second device, wherein the second information comprises one or more of following:
available capability information in the capability information carried in the first information;
capability information, supported by the second device, in the capability information carried in the first information;
capability information, allowed to be used by the second device, in the capability information carried in the first information; or
a UE policy used by the first device.

133. The communications device according to any one of claims 129 to 132, wherein the first device is a terminal, and the second device is a core network device.

134. The communications device according to claim 133, wherein second information is carried in one or more of following:
a registration response message; or
configuration information, wherein the configuration information is used to configure a UE policy for the terminal.

135. The communications device according to any one of claims 129 to 134, wherein the first information is carried in a registration request, and the registration request is used to request registration of the terminal.

136. The communications device according to claim 135, wherein the registration request carries a UE policy container, and the UE policy container comprises the first information; or,
the registration request carries a UE policy container and the first information.

137. The communications device according to claim 135 or 136, wherein the first device is a terminal device, and the second device is an AMF or a PCF.

138. A communications device, wherein the communications device is a second device and comprises:
the second device receives first information transmitted by a first device, wherein the first information carries capability information associated with a network access mode.

139. The communications device according to claim 138, wherein the capability information is used to indicate one or more of following:
whether network access performed based on a plurality of network access modes is supported; or
whether access mode switching performed based on a plurality of network access modes is supported.

140. The communications device according to claim 138 or 139, wherein a plurality of user plane connections are established based on the plurality of access modes, and the capability information is used to indicate one or more of following:
whether transmitting different data of a same service via the plurality of user plane connections is supported;
whether non-simultaneous transmission performed via the plurality of user plane connections is supported;
whether simultaneous transmission performed via the plurality of user plane connections is supported;
whether transmission performed by using one USIM via the plurality of user plane connections is supported;
whether transmission performed by using a plurality of USIMs via the plurality of user plane connections is supported;
whether transmission performed by using one SUPI via the plurality of user plane connections is supported;
whether transmission performed by using a plurality of SUPIs via the plurality of user plane connections is supported; or
a type of a core network supported for use for the plurality of user plane connections.

141. The communications device according to any one of claims 138 to 140, wherein the communications device further comprises:
the second device transmits second information to the first device, wherein the second information comprises one or more of following:
available capability information in the capability information carried in the first information;
capability information, supported by the second device, in the capability information carried in the first information;
capability information, allowed to be used by the second device, in the capability information carried in the first information; or
a UE policy used by the first device.

142. The communications device according to any one of claims 138 to 141, wherein the first device is a terminal, and the second device is a core network device.

143. The communications device according to claim 142, wherein second information is carried in one or more of following:
a registration response message; or
configuration information, wherein the configuration information is used to configure a UE policy for the terminal.

144. The communications device according to any one of claims 138 to 143, wherein the first information is carried in a registration request, and the registration request is used to request registration of the terminal.

145. The communications device according to claim 144, wherein the registration request carries a UE policy container, and the UE policy container comprises the first information; or,
the registration request carries a UE policy container and the first information.

146. The communications device according to claim 144 or 145, wherein the first device is a terminal device, and the second device is an AMF or a PCF.

147. A communications device, comprising a transceiver, a memory, and a processor, wherein the memory is configured to store a program, the processor is configured to: invoke the program in the memory, and control the transceiver to receive or transmit a signal, to cause the communications device to execute one of following: the method according to any one of claims 1 to 22, the method according to any one of claims 23 to 37, the method according to any one of claims 38 to 46, the method according to any one of claims 47 to 55, the method according to any one of claims 56 to 64, or the method according to any one of claims 65 to 73.

148. An apparatus, comprising a processor, configured to invoke a program from a memory, to cause the apparatus to execute one of following: the method according to any one of claims 1 to 22, the method according to any one of claims 23 to 37, the method according to any one of claims 38 to 46, the method according to any one of claims 47 to 55, the method according to any one of claims 56 to 64, or the method according to any one of claims 65 to 73.

149. A chip, comprising a processor, configured to invoke a program from a memory, to cause a device installed with the chip to execute one of following: the method according to any one of claims 1 to 22, the method according to any one of claims 23 to 37, the method according to any one of claims 38 to 46, the method according to any one of claims 47 to 55, the method according to any one of claims 56 to 64, or the method according to any one of claims 65 to 73.

150. A computer-readable storage medium, wherein the computer-readable storage medium stores a program, and the program causes a computer to execute one of following: the method according to any one of claims 1 to 22, the method according to any one of claims 23 to 37, the method according to any one of claims 38 to 46, the method according to any one of claims 47 to 55, the method according to any one of claims 56 to 64, or the method according to any one of claims 65 to 73.

151. A computer program product, comprising a program, and the program causes a computer to execute one of following: the method according to any one of claims 1 to 22, the method according to any one of claims 23 to 37, the method according to any one of claims 38 to 46, the method according to any one of claims 47 to 55, the method according to any one of claims 56 to 64, or the method according to any one of claims 65 to 73.

152. A computer program, wherein the computer program causes a computer to execute one of following: the method according to any one of claims 1 to 22, the method according to any one of claims 23 to 37, the method according to any one of claims 38 to 46, the method according to any one of claims 47 to 55, the method according to any one of claims 56 to 64, or the method according to any one of claims 65 to 73.
